# EUROPEAN PATENT SPECIFICATION

(11) **EP 3 534 545 B1**
(45) Date of publication and mention of the grant of the patent: **04.11.2020**
(21) Application number: 16921492.1
(22) Date of filing: 15.11.2016
(51) Int. Cl.: H04B 3/36, H04B 17/00, H04B 17/11, H04B 17/21

(54) **MULTI-CHANNEL CORRECTION APPARATUS, MULTI-CHANNEL CORRECTION METHOD AND TRANSCEIVING SYSTEM**
MEHRKANALIGE KORREKTURVORRICHTUNG, MEHRKANALIGES KORREKTURVERFAHREN UND SENDEEMPFANGSSYSTEM
APPAREIL DE CORRECTION MULTICANAL, PROCÉDÉ DE CORRECTION MULTICANAL ET SYSTÈME D'ÉMISSION-RÉCEPTION

(43) Date of publication of application: 04.09.2019
(73) Proprietor: Huawei Technologies Co., Ltd., Longgang District Shenzhen, Guangdong 518129 (CN)
(72) Inventor: ZHANG, Zhiwei, Shenzhen, Guangdong 518129 (CN); WANG, Wei, Shenzhen, Guangdong 518129 (CN)
(74) Representative: Gill Jennings & Every LLP
(86) International application number: PCT/CN2016/105963
(87) International publication number: WO 2018/090207

(56) References cited:
- WO-A1-2006/051614
- JP-A- 2011 106 858
- US-A1- 2004 166 808
- US-A1- 2010 075 594
- CATT: "On antenna calibration of LTE", 3GPP DRAFT; R1-080802_ON ANTENNA CALIBRATION OF LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20080205, 5 February 2008 (2008-02-05), XP050109285, [retrieved on 2008-02-05]
- CATT: 'On Antenna Calibration of LTE' 3GPPTSG RANI #52 R1-080802 18 January 2008, XP050109285

## Description

### TECHNICAL FIELD

This application relates to the wireless communications field, and in particular, to a multi-channel calibration apparatus, a multi-channel calibration method and a transceiver system.

### BACKGROUND

In a wireless communications system, an array antenna can be used to enhance network performance and increase a network capacity. However, because there are a large quantity of transmit/receive channels driving the array antenna in the wireless communications system, an amplitude error and/or a phase error between the transmit/receive channels become/becomes one of key factors that directly affect the network performance and capacity of the wireless communications system. Therefore, a technology for performing an amplitude calibration and/or a phase calibration between the transmit/receive channels is one of core technologies in the wireless communications system using the array antenna.

To meet a requirement for performing an amplitude calibration and/or a phase calibration between the transmit/receive channels, a channel calibration in the existing wireless communications system is implemented depending on a calibration feed network. However, because there are a large quantity of transmit/receive channels driving the array antenna in the wireless communications system, the calibration feed network uses cascaded sum dividers to interconnect a calibrated channel and a calibration channel. This greatly increases design complexity of a high frequency circuit in the calibration feed network. Therefore, there are high requirements on device design specifications, and there is great difficulty in engineering implementation.

US 2004/166808 relates to adaptive array antenna receiving apparatus and antenna array calibration method.

CATT: "On antenna calibration of LTE",3GPP DRAFT; R1-080802_ON ANTENNA CALIBRATION OF LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Sorrento, Italy; 20080205, 5 February 2008 relates to on antenna calibration of LTE.

### SUMMARY

An objective of this application is to provide a multi-channel calibration apparatus, a multi-channel calibration method, and a transceiver system to reduce design complexity and implementation complexity of a high frequency circuit in a calibration feed network.

Various aspects of the present disclosure have been defined in the independent claims. Further technical features of each of these aspects have been defined in the respective dependent claims.

To resolve the technical problem, this application uses the following technical solutions.

In the first aspect, in the multi-channel calibration apparatus provided by this application, the calibration feed unit includes the M detectors, and each detector may receive a high frequency signal used as a calibration measurement signal. In this way, input ports of a detector may be coupled to two channels directly, so that the current detector obtains high frequency calibration measurement signals on the two channels in an amplitude calibration. In addition, output ends of each detector are connected to the calibration control unit to ensure that the calibration control unit can obtain a corresponding amplitude calibration coefficient and/or phase calibration coefficient based on level signals and that amplitudes and/or phases of the two channels coupled to the current detector are calibrated. In this way, the detector can convert high frequency signals on the two corresponding channels into low frequency signals, and transmit the low frequency signals to the calibration control unit for generating the amplitude calibration coefficient and/or phase calibration coefficient, so that the amplitudes and/or phases of the two channels coupled to the current detector are calibrated.

In addition, because at least one input port of each detector and an input port of another detector are jointly coupled to one channel, that is, two detectors each have one input port jointly coupled to one channel, after the current detector participates in a corresponding channel calibration, when another detector jointly coupled to one channel with an input port of the current detector participates in a corresponding channel calibration, a calibrated channel can be used as one of two channels in the current channel calibration, so that the current channel calibration can use the calibrated channel for reference to calibrate amplitudes and/or phases of the two channels. By analogy, amplitudes and/or phases of a plurality of channels are calibrated finally. Therefore, in the multi-channel calibration apparatus provided by this application, the M detectors are coupled to corresponding channels in a manner in which one detector is coupled to two channels, and input ports of every two detectors are coupled to one channel, so that the amplitudes and/or the phases of the plurality of channels can be calibrated. This reduces design complexity of a high frequency circuit in a calibration feed network, reduces requirements on design specifications and difficulty in engineering implementation, and facilitates implementation of device miniaturization.

In this implementation, the data processing module is connected to each of the M detectors, but the control module controls the data processing module to read the level signals output by the m^{th} detector, and controls the data processing module to transmit the amplitude calibration coefficient to the execution unit in an amplitude calibration and to transmit the phase calibration coefficient to the execution unit in a phase calibration. Therefore, the control module can control the data processing module to implement an amplitude calibration and/or a phase calibration on a corresponding channel.

In this implementation, a detector quantity and sequence numbers of two channels coupled to output ends of a detector are defined, so that two channels coupled to one detector are adjacent, and that two detectors coupled to one channel are adjacent. This reduces complexity of cabling between each detector and a channel coupled to the detector, and further reduces the requirements on the design specifications and the difficulty in the engineering implementation.

In this implementation, a detector quantity is defined, so that the detector quantity is consistent with a channel quantity. After first N-1 detectors participate in calibrations of all channels, input ports of an N^{th} detector are coupled to the N^{th} channel and any one of first N-2 channels, so that after the N^{th} channel is calibrated in a calibration in which an (N-1)^{th} detector participates, the calibrated N^{th} channel can be further used as a basis for the N^{th} detector to participate in a calibration of the N^{th} channel and any one of the first N-2 channels. In addition, based on level signals representing amplitude information and/or phase information of the N^{th} channel and the t^{th} channel and obtained in the calibration process, whether a cumulative error is generated in a previous calibration process may be further determined; and if the cumulative error is generated, the N channels may be re-calibrated, so that the cumulative error generated in the previous calibration process is avoided, where t may be selected based on an actual situation.

### BRIEF DESCRIPTION OF DRAWINGS

To describe the technical solutions in the embodiments of this application more clearly, the following briefly describes the accompanying drawings required for describing the embodiments or the prior art. Apparently, the accompanying drawings in the following description show merely some embodiments of this application, and persons of ordinary skill in the art may still derive other drawings from these accompanying drawings without creative efforts.
FIG 1 is a first schematic structural diagram of a multi-channel calibration apparatus applied to transmit channels according to Embodiment 1 of this application;
FIG 2 is a second schematic structural diagram of a multi-channel calibration apparatus applied to transmit channels according to Embodiment 1 of this application;
FIG 3 is a specific schematic structural diagram of an input port of a detector coupled to a channel;
FIG 4 is a workflow chart of a method in an m'^{th} amplitude calibration according to Embodiment 1 of this application;
FIG 5 is a workflow chart of a method in an m"^{th} phase calibration according to Embodiment 1 of this application;
FIG 6 is a logical structural block diagram of two consecutive calibrations by a multi-channel calibration apparatus according to Embodiment 1 of this application;
FIG 7 is a feasible workflow chart of a method in an m'^{th} amplitude calibration according to Embodiment 1 of this application;
FIG 8 is a feasible workflow chart of a method in an m"^{th} phase calibration according to Embodiment 1 of this application;
FIG 9 is a schematic structural diagram of a multi-channel calibration apparatus applied to an ABF-based multi-channel wireless device according to Embodiment 1 of this application;
FIG 10 is a schematic structural diagram of a multi-channel calibration apparatus applied to an HBF-based multi-channel wireless device according to Embodiment 1 of this application;
FIG 11 is a schematic structural diagram of a multi-channel calibration apparatus applied to a DBF-based multi-channel wireless device according to Embodiment 1 of this application;
FIG 12 is a first specific structural implementation diagram of a detector according to Embodiment 1;
FIG 13 is a second specific structural implementation diagram of a detector according to Embodiment 1;
FIG 14 is a workflow chart of an N'^{th} calibration of each calibration period in a multi-channel amplitude calibration corresponding to FIG. 2;
FIG. 15 is a workflow chart of an N"^{th} calibration of each calibration period in a multi-channel phase calibration corresponding to FIG. 2;
FIG. 16 is a first schematic structural diagram of a multi-channel calibration apparatus applied to receive channels according to Embodiment 3 of this application;
FIG 17 is a second schematic structural diagram of a multi-channel calibration apparatus applied to receive channels according to Embodiment 3 of this application;
FIG. 18 is a specific schematic structural diagram of an output end of a reference source unit coupled to a channel;
FIG. 19 is a workflow chart of a method in an m'^{th} amplitude calibration according to Embodiment 3 of this application;
FIG. 20 is a workflow chart of a method in an m"^{th} phase calibration according to Embodiment 3 of this application;
FIG. 21 is a logical structural block diagram of two consecutive calibrations by a multi-channel calibration apparatus according to Embodiment 3 of this application;
FIG. 22 is a feasible workflow chart of a method in an m'^{th} amplitude calibration according to Embodiment 3 of this application;
FIG. 23 is a feasible workflow chart of a method in an m"^{th} phase calibration according to Embodiment 3 of this application;
FIG. 24 is a workflow chart of an N^{th} calibration of each amplitude calibration period in a multi-channel amplitude calibration corresponding to FIG. 17;
FIG. 25 is a workflow chart of an N^{th} calibration of each phase calibration period in a multi-channel phase calibration corresponding to FIG. 17;
FIG. 26 is a workflow chart of a multi-channel calibration method according to Example 5 of this application; and
FIG. 27 is a diagram of a relationship between a primary channel group and a secondary channel group classified in a multi-channel calibration method according to Example 5 of this application.

### DESCRIPTION OF EMBODIMENTS

The following describes the technical solutions in the embodiments of this application with reference to the accompanying drawings in the embodiments of this application. A multi-channel calibration apparatus, a calibration method, and a transceiver system provided by this application may be applied to a multi-channel wireless device using an array antenna, or may be applied to calibrations of channels of a chip having a multi-channel processing unit, and calibrations of channels between chips. The array antenna may be used to implement various beamforming technologies, for example, a digital beamforming (Digital Beamforming, DBF for short) technology, an analog beamforming (Analog Beamforming, ABF for short) technology, or an analog and digital hybrid beamforming (Hybrid Beamforming, HBF for short) technology.

For ease of description, when there are a plurality of technical features, subscripts are added to reference signs of the technical features to distinguish locations of the technical features and a sequence thereof.

### Embodiment 1

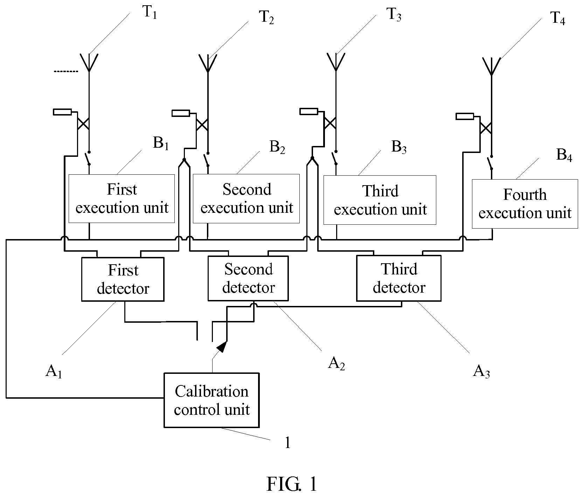

Referring to FIG. 1 to FIG. 3, a multi-channel calibration apparatus provided by this embodiment of this application is applied to transmit channels, and includes a calibration control unit 1 and a calibration feed unit, where the calibration feed unit includes M detectors, two input ports of each detector are coupled to two channels, each detector is configured to participate in an amplitude calibration and/or a phase calibration of two channels, input ports of two adjacent detectors are jointly coupled to one channel, and the calibration control unit 1 is connected to an output end of each of the M detectors.

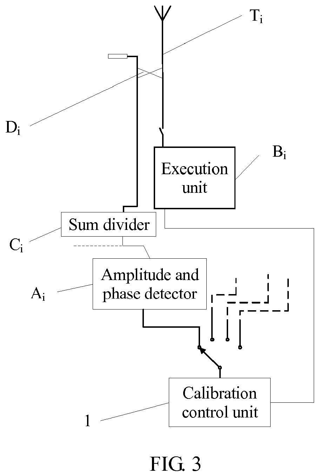

As shown in FIG. 3, Aᵢ represents any detector, and its subscript is a sequence number of the current detector; Tᵢ represents any channel, and its subscript is a sequence number of the current channel; and Bᵢ represents any execution unit, and its subscript is the current execution unit.

An m^{th} detector Aₘ is configured to detect a calibration measurement signal on an r^{th} channel Tᵣ and a calibration measurement signal on a k^{th} channel Tₖ, to obtain level signals representing amplitude information and/or phase information of the r^{th} channel Tᵣ and the k^{th} channel Tₖ, where 1 ≤ m ≤ M, 1 ≤ r ≤ N, 1 ≤ k ≤ N, r ≠ k, M is an integer greater than or equal to 1, N is a channel quantity, and N is an integer greater than or equal to 2.

The calibration control unit 1 is configured to obtain an amplitude calibration coefficient in an amplitude calibration based on the level signals representing the amplitude information of the r^{th} channel Tᵣ and the k^{th} channel Tₖ, where the amplitude calibration coefficient is used to calibrate amplitudes of two channels coupled to the m^{th} detector Aₘ, that is, each detector is configured to participate in an amplitude calibration of two channels coupled to the detector; and/or obtain a phase calibration coefficient in a phase calibration based on the level signals representing the phase information of the r^{th} channel Tᵣ and the k^{th} channel Tₖ, where the phase calibration coefficient calibrates phases of two channels coupled to the m^{th} detector Aₘ, that is, each detector is configured to participate in a phase calibration of two channels.

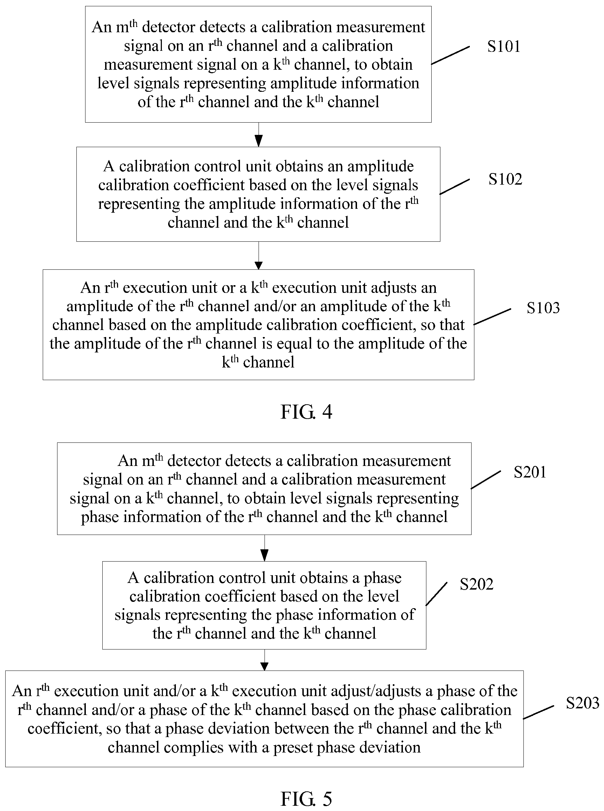

In a specific implementation, a method for calibrating channels by the multi-channel calibration apparatus provided by this embodiment includes a plurality of calibrations. Herein the calibration may be an amplitude calibration or may be a phase calibration. Specifically, referring to FIG. 4, channels calibrated in an m'^{th} amplitude calibration are an r^{th} channel and a k^{th} channel, where M' is an amplitude calibration quantity, M' is an integer greater than or equal to 1, and m' is an integer greater than or equal to 1 and less than or equal to M'; and a calibration method in the m'^{th} amplitude calibration includes the following steps:
S101. An m^{th} detector Aₘ detects a calibration measurement signal on an r^{th} channel Tᵣ and a calibration measurement signal on a k^{th} channel Tₖ, to obtain level signals representing amplitude information of the r^{th} channel Tᵣ and the k^{th} channel Tₖ.
S102. A calibration control unit 1 obtains an amplitude calibration coefficient based on the level signals representing the amplitude information of the r^{th} channel Tᵣ and the k^{th} channel Tₖ.
S103. An r^{th} execution unit Bᵣ and/or a k^{th} execution unit Bₖ adjust/adjusts an amplitude of the r^{th} channel Tᵣ and/or an amplitude of the k^{th} channel Tₖ based on the amplitude calibration coefficient, so that the amplitude of the r^{th} channel Tᵣ is equal to the amplitude of the k^{th} channel Tₖ.

Specifically, when m' = 1, the r^{th} execution unit Bᵣ or the k^{th} execution unit Bₖ adjusts the amplitude of the r^{th} channel Tᵣ and/or the amplitude of the k^{th} channel Tₖ based on the amplitude calibration coefficient, so that the amplitude of the r^{th} channel Tᵣ is equal to the amplitude of the k^{th} channel Tₖ; or
when m' ≥ 2, in the m'^{th} amplitude calibration, the k^{th} execution unit Bᵣ adjusts the amplitude of the r^{th} channel Tᵣ based on the amplitude calibration coefficient, so that the amplitude of the r^{th} channel Tᵣ is equal to the amplitude of the k^{th} channel Tₖ, where the k^{th} channel Tₖ participates in an (m'-1)^{th} amplitude calibration.

Referring to FIG. 5, channels calibrated in an m"^{th} phase calibration are an r^{th} channel and a k^{th} channel, where M" is a phase calibration quantity, M" is an integer greater than or equal to 1, and m" is an integer greater than or equal to 1 and less than or equal to M"; and a calibration method in the m"^{th} phase calibration includes the following steps:
S201. An m^{th} detector Aₘ detects a calibration measurement signal on an r^{th} channel Tᵣ and a calibration measurement signal on a k^{th} channel Tₖ, to obtain level signals representing phase information of the r^{th} channel Tᵣ and the k^{th} channel Tₖ.
S202. A calibration control unit 1 obtains a phase calibration coefficient based on the level signals representing the phase information of the r^{th} channel Tᵣ and the k^{th} channel Tₖ.
S203. An r^{th} execution unit Bᵣ and/or a k^{th} execution unit Bₖ adjust/adjusts a phase of the r^{th} channel Tᵣ and/or a phase of the k^{th} channel Tₖ based on the phase calibration coefficient, so that a phase deviation between the r^{th} channel Tᵣ and the k^{th} channel Tₖ complies with a preset phase deviation.

Specifically, when m" = 1, in the m"^{th} phase calibration, the r^{th} execution unit Bᵣ and/or the k^{th} execution unit Bₖ adjust/adjusts the phase of the r^{th} channel Tᵣ and/or the phase of the k^{th} channel Tₖ based on the phase calibration coefficient, so that the phase deviation between the r^{th} channel Tᵣ and the k^{th} channel Tₖ complies with the preset phase deviation; or
when m" ≥ 2, in the m"^{th} phase calibration, the r^{th} execution unit Bᵣ adjusts the phase of the r^{th} channel Tᵣ based on the phase calibration coefficient, so that the phase deviation between the r^{th} channel Tᵣ and the k^{th} channel Tₖ complies with the preset phase deviation, where the k^{th} channel participates in an (m"-1)^{th} phase calibration.

Regardless of the m'^{th} amplitude calibration or the m"^{th} phase calibration, the calibration measurement signal on the r^{th} channel Tᵣ is generated and transmitted by a transceiver of the r^{th} channel Tᵣ, and the calibration measurement signal on the k^{th} channel Tₖ is generated and transmitted by a transceiver of the k^{th} channel Tₖ. In addition, a calibration measurement signal received by any detector from a channel is a high frequency signal, and the detector detects the calibration measurement signal to obtain a level signal that is a low frequency signal.

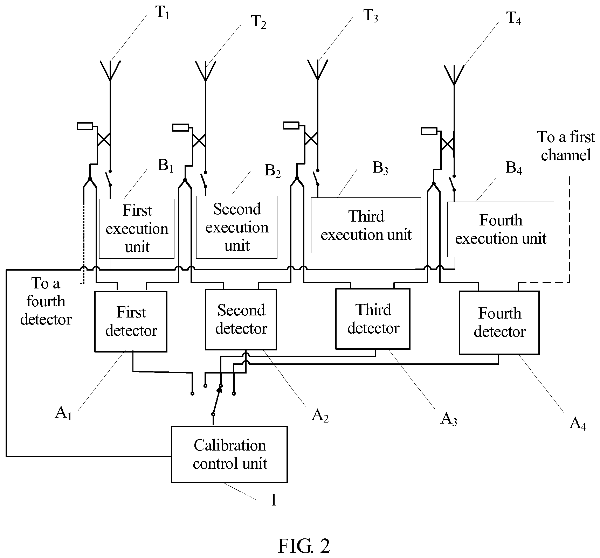

As can be seen from FIG. 1 and FIG. 2, input ports of each detector are directly coupled to two corresponding channels. When a detector participates in a calibration, an output end of the detector is directly connected to the calibration control unit 1. Therefore, the detectors do not need to be cascaded; instead, each detector may be arranged in a distributed manner, and can obtain and process calibration measurement signals on the channels and directly transmit the calibration measurement signals to the calibration control unit 1 for data processing. Therefore, in comparison with a conventional calibration apparatus, the calibration apparatus provided by this embodiment can effectively reduce a quantity of cascades in a high frequency feed network, and reduce design complexity of the high frequency feed network; in addition, if the channel quantity is larger, advantages of the calibration apparatus provided by this embodiment are more obvious.

In addition, the detectors are arranged in the distributed manner in the foregoing embodiment, and the detectors may be integrated in engineering implementation to further reduce volumes and costs; or each detector and the calibration control unit 1 may be integrated in an ASIC chip. Certainly, each detector and the calibration control unit 1 may also be implemented by using discrete components.

It may be understood that, referring to FIG 3, coupling a channel to an input port of a detector in the foregoing embodiment may be specifically implemented by a coupler and a sum divider, or may be implemented by another existing coupling structure. Specifically, referring to FIG. 1 and FIG. 2, each channel is connected to a sum divider by using a coupler, and each sum divider is connected to input ports of two detectors.

In FIG. 3, Cᵢ is any sum divider, and its subscript is a sequence number of the current sum divider; and Dᵢ is any coupler, and its subscript is a sequence number of the current coupler. In addition, because each channel is definitely coupled to one detector, if a sequence number of a current channel is determined, a sequence number of a current sum divider and a sequence number of a current coupler are also determined, that is, the sequence number of the current channel, the sequence number of the current sum divider, and the sequence number of the current coupler are the same.

In addition, each channel may have an execution unit adjusting a channel amplitude or phase in the foregoing embodiment, or N execution units correspondingly connected to the N channels may be added to the multi-channel calibration apparatus; each execution unit is further connected to the calibration control unit 1; and each execution unit is configured to adjust, based on an amplitude calibration coefficient, an amplitude of a channel connected to the execution unit, and/or adjust, based on a phase calibration coefficient, a phase of a channel connected to the execution unit. In this way, when the multi-channel calibration apparatus is used to calibrate a channel, the calibration apparatus can not only generate an amplitude calibration coefficient for calibrating an amplitude and/or a phase calibration coefficient for calibrating a phase, but also perform a direct calibration on the channel.

Any execution unit is configured to adjust an amplitude and/or a phase of a channel connected to the execution unit, and generally includes a phase shifter and/or an amplitude adjuster. The phase shifter may be an analog phase shifter or a digital phase shifter. The amplitude adjuster may be an analog amplitude adjuster or a digital amplitude adjuster.

In addition, an added execution unit, and a coupler and a sum divider for connecting a channel to an input port of a detector may be further integrated into an ASIC chip integrated with the detector and the calibration control unit 1, so that miniaturization of the multi-channel calibration apparatus is implemented; or an added execution unit, and a coupler and a sum divider for connecting a channel to an input port of a detector may be independently integrated into another ASIC chip, and connected to an ASIC chip integrated with the detector and the calibration control unit 1.

It should be noted that, for any detector in the foregoing embodiment, a variety of detectors are available, for example, a common sum-difference detector, where the sum-difference detector may represent an amplitude or represent a phase based on a level signal output by a calibration measurement signal. Certainly, the type of any detector Aᵢ in the foregoing embodiment may also be another feasible detector.

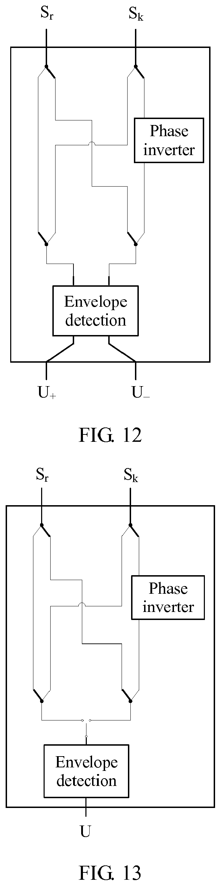

FIG. 12 is a specific structural implementation diagram of a first detector, where the detector is a sum-difference detector, Sᵣ and Sₖ are two high frequency input signals, and U₊ and U₋ are error levels (low frequency signals) of the two high frequency input signals.

FIG. 13 is a specific structural implementation diagram of a second detector, where the detector is another sum-difference detector, Sᵣ and Sₖ are two high frequency input signals, and U is an error level (low frequency signal) of the two high frequency input signals.

As can be found through comparison between FIG. 12 and FIG. 13, FIG. 12 is a structure with two output ends, and FIG. 13 is a structure with a single output end, but a switch may be used in FIG 13 to implement two outputs and implement functions of two output ends in essence.

Further, considering that each detector participates in a calibration of two channels, a detector quantity M in the multi-channel calibration apparatus provided by the foregoing embodiment is inseparable from the channel quantity N, and both the amplitude calibration quantity M' and the phase calibration quantity M" are related to the detector quantity M. The following describes a relationship between the detector quantity, the channel quantity, and the calibration quantity with reference to accompanying drawings.

First relationship: M = N - 1, that is, the detector quantity M is one less than the channel quantity N, but because each detector participates in a channel calibration, both the amplitude calibration quantity M' and the phase calibration quantity M" are equal to N-1.

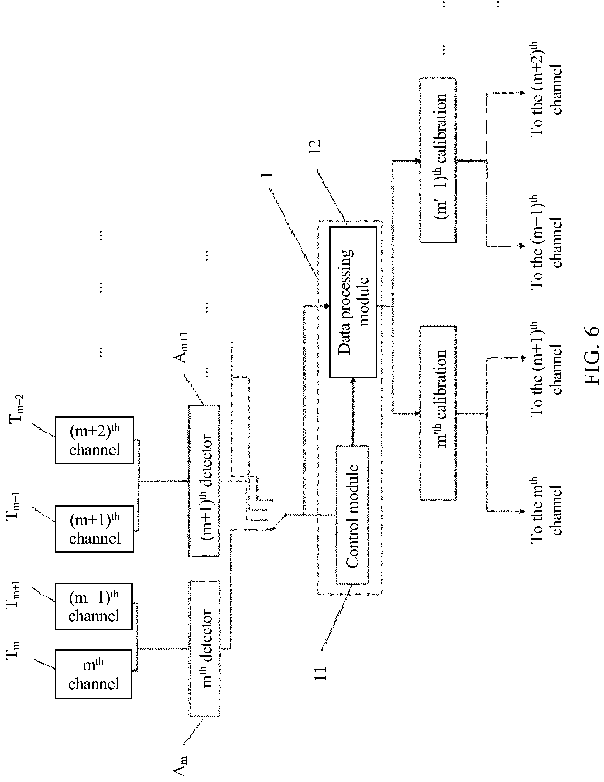

A sequence of channel calibrations is related to a coupling relationship between a detector and a channel. For example, referring to FIG. 6, the channels coupled to the m^{th} detector Aₘ are an m^{th} channel Tₘ and an (m+1)^{th} channel Tₘ₊₁, that is, the m^{th} detector Aₘ participates in an amplitude calibration and/or a phase calibration of the m^{th} channel Tₘ and the (m+1)^{th} channel Tₘ₊₁; and channels coupled to an (m+1)^{th} detector are the (m+1)^{th} channel Tₘ₊₁ and an (m+2)^{th} channel Tₘ₊₂, that is, the (m+1)^{th} detector Aₘ₊₁ participates in a calibration of the (m+1)^{th} channel Tₘ₊₁ and the (m+2)^{th} channel Tₘ₊₁, where m ≤ N - 2. In this case, because the m^{th} detector Aₘ participates in the amplitude calibration and/or the phase calibration of the m^{th} channel Tₘ and the (m+1)^{th} channel Tₘ₊₁, and the channels coupled to the (m+1)^{th} detector Aₘ₊₁ are the (m+1)^{th} channel Tₘ₊₁ and the (m+2)^{th} channel Tₘ₊₂, obviously, channels coupled to two adjacent detectors are arranged in sequence. This can reduce complexity of cabling between each detector and a channel coupled to the detector, and further reduce requirements on design specifications and difficulty in engineering implementation.

For example, given the first relationship, FIG. 1 is a first schematic structural diagram of the multi-channel calibration apparatus applied to transmit channels according to this embodiment, where the channel quantity N is 4, the detector quantity M is 3, input ports of a first detector A₁ are coupled to a first channel T₁ and a second channel T₂, input ports of a second detector A₂ are coupled to the second channel T₂ and a third channel T₃, and input ports of a third detector A₃ are coupled to the third channel T₃ and a fourth channel T₄.

Referring to FIG. 4 and FIG. 6, in amplitude calibrations, in a first amplitude calibration, the first detector A₁ participates in the amplitude calibration of the first channel T₁ and the second channel T₂; in a second amplitude calibration, the second detector A₂ participates in the amplitude calibration of the second channel T₂ and the third channel T₃; and in a third amplitude calibration, the third detector A₃ participates in the amplitude calibration of the third channel T₃ and the fourth channel T₄.

With reference to FIG. 5 and FIG. 6, in phase calibrations, in a first phase calibration, the first detector A₁ completes the phase calibration of the first channel T₁ and the second channel T₂; in a second phase calibration, the second detector A₂ completes the phase calibration of the second channel T₂ and the third channel T₃; and in a third phase calibration, the third detector A₃ completes the phase calibration of the third channel T₃ and the fourth channel T₄.

Second relationship: M = N, that is, the detector quantity M is equal to the channel quantity N, but because each detector participates in a channel calibration, both the amplitude calibration quantity M' and the phase calibration quantity M" should be at least N. A sequence of channel calibrations is related to a coupling relationship between a detector and a channel, for example,

when a sequence number of a current detector is 1 ≤ m ≤ N - 2, referring to FIG. 6, the channels coupled to the m^{th} detector Aₘ are an m^{th} channel Tₘ and an (m+1)^{th} channel Tₘ₊₁, that is, the m^{th} detector Aₘ participates in an amplitude calibration and/or a phase calibration of the m^{th} channel Tₘ and the (m+1)^{th} channel Tₘ₊₁; and channels coupled to an (m+1)^{th} detector are the (m+1)^{th} channel Tₘ₊₁ and an (m+2)^{th} channel Tₘ₊₂, that is, the (m+1)^{th} detector Aₘ₊₁ participates in an amplitude calibration and/or a phase calibration of the (m+1)^{th} channel Tₘ₊₁ and the (m+2)^{th} channel Tₘ₊₂; or
when a sequence number of a current detector is m = N, the channels coupled to the m^{th} detector Aₘ are an N^{th} channel T_{N} and a t^{th} channel Tₜ, where 1 ≤ t ≤ N - 2, that is, an N^{th} detector A_{N} participates in a calibration of the N^{th} channel T_{N} and the t^{th} channel Tₜ.

t may be selected based on a calibration quantity. Generally, if the calibration quantity is larger, a cumulative error is larger. Therefore, generally either of two channels calibrated in a first calibration is selected as the t^{th} channel Tₜ.

It may be understood that, each calibration is based on a channel that is calibrated previously. Therefore, an error may be generated. As the calibration quantity increases, the cumulative error may be larger, and the generated error is referred to as a cumulative error.

For example, given the second relationship, FIG. 2 is a second schematic structural diagram of the multi-channel calibration apparatus applied to transmit channels according to this embodiment, where the channel quantity N is 4, the detector quantity m is 4, input ports of a first detector A₁ are coupled to a first channel T₁ and a second channel T₂, input ports of a second detector A₂ are coupled to the second channel T₂ and a third channel T₃, input ports of a third detector A₃ are coupled to the third channel T₃ and a fourth channel T₄, and input ports of a fourth detector A₄ are coupled to the fourth channel T₄ and the first channel T₁.

In amplitude calibrations, in a first amplitude calibration, the first detector A₁ participates in the amplitude calibration of the first channel T₁ and the second channel T₂; in a second amplitude calibration, the second detector A₂ participates in the amplitude calibration of the second channel T₂ and the third channel T₃; in a third amplitude calibration, the third detector A₃ participates in the amplitude calibration of the third channel T₃ and the fourth channel T₄; and in a fourth amplitude calibration, the fourth detector A₄ participates in the amplitude calibration of the fourth channel T₄ and the first channel T₁. If it is found in this step that amplitudes of the fourth channel T₄ and the first channel T₁ are inconsistent, it indicates that a cumulative error exists in first three amplitude calibrations, and therefore, the fourth detector A₄ is used to complete the amplitude calibration of the fourth channel T₄ and the first channel T₁, and the process returns to the first amplitude calibration to restart an amplitude calibration, until amplitudes of the fourth channel T₄ and the first channel T₁ are consistent; or if it is found in this step that amplitudes of the fourth channel T₄ and the first channel T₁ are consistent, it indicates that no cumulative error exists, and the amplitude calibration is terminated.

In phase calibrations, in a first phase calibration, the first detector A₁ participates in the phase calibration of the first channel T₁ and the second channel T₂; in a second phase calibration, the second detector A₂ participates in the phase calibration of the second channel T₂ and the third channel T₃; in a third phase calibration, the third detector A₃ participates in the phase calibration of the third channel T₃ and the fourth channel T₄; and in a fourth phase calibration, the fourth detector A₄ participates in the phase calibration of the fourth channel T₄ and the first channel T₁. If it is found in this step that a level deviation representing a phase deviation between the fourth channel T₄ and the first channel T₁ does not comply with a preset level deviation, it indicates that a cumulative error exists in first three phase calibrations, and therefore, the fourth detector A₄ is used to complete the phase calibration of the fourth channel T₄ and the first channel T₁, and the process returns to the first phase calibration to restart a phase calibration, until a level deviation representing a phase deviation between the fourth channel T₄ and the first channel T₁ complies with the preset level deviation; or if it is found in this step that a level deviation representing a phase deviation between the fourth channel T₄ and the first channel T₁ complies with a preset level deviation, it indicates that no cumulative error exists, and the phase calibration is terminated.

As can be found from the descriptions about the amplitude calibration process and the phase calibration process of the multi-channel calibration apparatus shown in FIG. 2, the second calibration uses the second channel T₂ in the first calibration as a basis to adjust the third channel T₃ and calibrate the second channel T₂ and the third channel T₃; the third calibration uses the third channel T₃ in the second calibration as a basis to adjust the fourth channel T₄ and calibrate the third channel T₃ and the fourth channel T₄; and the fourth calibration uses the fourth channel T₄ in the third calibration as a basis to adjust the first channel T₁ and calibrate the fourth channel T₄ and the first channel T₁.

In a feasible implementation, the level signals representing the amplitude information of the r^{th} channel and the k^{th} channel in the foregoing embodiment include a detection level representing the amplitude of the r^{th} channel and a detection level representing the amplitude of the k^{th} channel.

The level signals representing the phase information of the r^{th} channel and the k^{th} channel include a level deviation representing the phase deviation between the r^{th} channel and the k^{th} channel. In this implementation, an example is used to describe the level signals representing the amplitude information and the phase information of the r^{th} channel and the k^{th} channel.

FIG. 6 shows a structure of the calibration control unit 1 in the foregoing embodiment. The calibration control unit 1 includes a control module 11 and a data processing module 12, where input ports of the data processing module 12 are connected to m detectors respectively, and an output end of the data processing module 12 is connected to each execution unit Bᵢ.

The control module 11 is configured to control, in an amplitude calibration, the data processing module 12 to read a detection level representing an amplitude of an r^{th} channel and a detection level representing an amplitude of a k^{th} channel and transmitted by an m^{th} detector Aₘ, and/or control, in a phase calibration, the data processing module 12 to read a level deviation representing a phase deviation between an r^{th} channel and a k^{th} channel and transmitted by an m^{th} detector Aₘ.

The data processing module 12 is configured to obtain an amplitude calibration coefficient in the amplitude calibration based on a level deviation between the detection level representing the amplitude of the r^{th} channel and the detection level representing the amplitude of the k^{th} channel, and/or obtain a phase calibration coefficient based on a preset level deviation and the level deviation representing the phase deviation between the r^{th} channel and the k^{th} channel.

Specifically, the data processing module 12 determines, in the amplitude calibration, whether the level deviation exists between the detection level representing the amplitude of the r^{th} channel and the detection level representing the amplitude of the k^{th} channel, and if the level deviation exists, obtains the amplitude calibration coefficient based on the level deviation; and/or determines, in the phase calibration, whether the level deviation representing the phase deviation between the r^{th} channel Tᵣ and the k^{th} channel Tₖ complies with the preset level deviation, and if the level deviation does not comply with the preset level deviation, obtains the phase calibration coefficient based on the preset level deviation and the level deviation representing the phase deviation between the r^{th} channel Tᵣ and the k^{th} channel Tₖ.

The control module 11 is further configured to control, in the amplitude calibration, the data processing module 1 to transmit the amplitude calibration coefficient to an execution unit, so that the execution unit adjusts, based on the amplitude calibration coefficient, amplitudes of channels coupled to the m^{th} detector Aₘ, and/or control, in the phase calibration, the data processing module 1 to transmit the phase calibration coefficient to an execution unit, so that the execution unit adjusts, based on the phase calibration coefficient, phases of channels coupled to the m^{th} detector Aₘ.

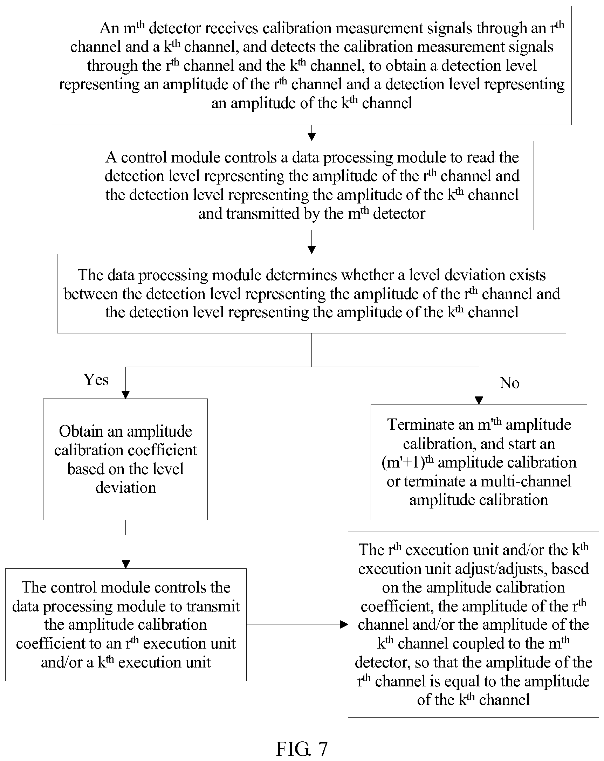

Referring to FIG. 7, a work process in an m'^{th} amplitude calibration is as follows:
Step 1: An m^{th} detector Aₘ receives calibration measurement signals through an r^{th} channel Tᵣ and a k^{th} channel Tₖ, and detects the calibration measurement signals through the r^{th} channel Tᵣ and the k^{th} channel Tₖ, to obtain a detection level representing an amplitude of the r^{th} channel Tᵣ and a detection level representing an amplitude of the k^{th} channel.
Step 2: A control module 11 controls a data processing module 12 to read the detection level representing the amplitude of the r^{th} channel Tᵣ and the detection level representing the amplitude of the k^{th} channel Tₖ and transmitted by the m^{th} detector Aₘ.
Step 3: The data processing module 12 determines whether a level deviation exists between the detection level representing the amplitude of the r^{th} channel Tᵣ and the detection level representing the amplitude of the k^{th} channel Tₖ; and
   if yes, obtains an amplitude calibration coefficient based on the level deviation; or if no, terminates the m'^{th} amplitude calibration, and starts an (m'+1)^{th} amplitude calibration or terminates a multi-channel amplitude calibration.
Step 4: The control module 11 controls the data processing module 12 to transmit the amplitude calibration coefficient to an r^{th} execution unit Bᵣ and/or a k^{th} execution unit Bₖ.
Step 5: The r^{th} execution unit Bᵣ and/or the k^{th} execution unit Bₖ adjust/adjusts the amplitude of the r^{th} channel Tᵣ and/or the amplitude of the k^{th} channel Tₖ based on the amplitude calibration coefficient, so that the amplitude of the r^{th} channel Tᵣ is equal to the amplitude of the k^{th} channel Tₖ.

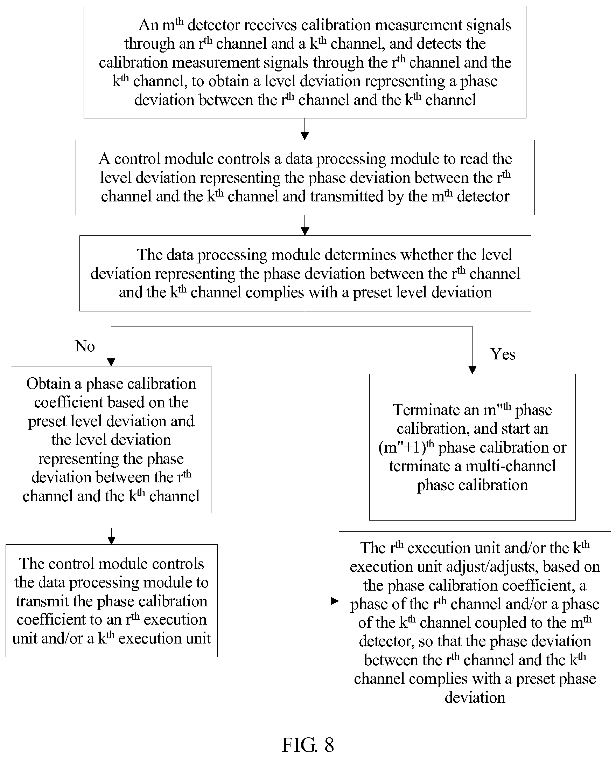

Referring to FIG. 8, a work process in an m"^{th} phase calibration is as follows:
Step 1: An m^{th} detector Aₘ receives calibration measurement signals through an r^{th} channel Tᵣ and a k^{th} channel Tₖ, and detects the calibration measurement signals through the r^{th} channel Tᵣ and the k^{th} channel Tₖ, to obtain a level deviation representing a phase deviation between the r^{th} channel Tᵣ and the k^{th} channel Tₖ.
Step 2: A control module 11 controls a data processing module 12 to read the level deviation representing the phase deviation between the r^{th} channel Tᵣ and the k^{th} channel Tₖ and transmitted by the m^{th} detector Aₘ.
Step 3: The data processing module 12 determines whether the level deviation representing the phase deviation between the r^{th} channel Tᵣ and the k^{th} channel Tₖ complies with a preset level deviation; and
   if yes, terminates the m"^{th} phase calibration, and starts an (m"+1)^{th} phase calibration or terminates a multi-channel phase calibration; or
   if no, obtains a phase calibration coefficient based on the preset level deviation and the level deviation representing the phase deviation between the r^{th} channel Tᵣ and the k^{th} channel Tₖ.
Step 4: The control module 11 controls the data processing module 12 to transmit the phase calibration coefficient to an r^{th} execution unit Bᵣ and/or a k^{th} execution unit Bₖ.
Step 5: The r^{th} execution unit Bᵣ or the k^{th} execution unit Bₖ adjusts a phase of the r^{th} channel Tᵣ and/or a phase of the k^{th} channel Tₖ based on the phase calibration coefficient, so that the phase deviation between the r^{th} channel Tᵣ and the k^{th} channel Tₖ complies with a preset phase deviation.

In this implementation, the data processing module 12 is connected to each of M detectors, but the control module 11 controls the data processing module 12 to read level signals output by the m^{th} detector Aₘ, and controls the data processing module 12 to transmit the amplitude calibration coefficient to the r^{th} execution unit Bᵣ and/or the k^{th} execution unit Bₖ in the amplitude calibration to implement the amplitude calibration of the channels coupled to the m^{th} detector, and to transmit the phase calibration coefficient to the r^{th} execution unit Bᵣ and/or the k^{th} execution unit Bₖ in the phase calibration to implement the phase calibration of the channels coupled to the m^{th} detector. Therefore, the control module 11 can control the data processing module 12 to implement an amplitude calibration and/or a phase calibration on a corresponding channel.

In addition, when starting the m'^{th} amplitude calibration or the m"^{th} phase calibration, in hardware implementation, the control module 11 may be connected to a control port of each detector, or may be connected to the data processing module 12, as long as it can be ensured that the data processing module 12 reads the detection level representing the amplitude of the r^{th} channel and the detection level representing the amplitude of the k^{th} channel and transmitted by the m^{th} detector Aₘ, and/or it is ensured that the data processing module 12 reads the level deviation representing the phase deviation between the r^{th} channel and the k^{th} channel and transmitted by the m^{th} detector Aₘ.

It should be noted that, the control module 11 and the data processing module 12 in the calibration control unit 1 in the foregoing embodiment may be integrated in an ASIC chip, or may be implemented by using discrete components.

In addition, the multi-channel calibration apparatus provided by the foregoing embodiment is not limited to calibrations of four channels shown in FIG. 1 or FIG. 2. The apparatus can also calibrate more channels. However, as a quantity of channels to be calibrated varies, a quantity of detectors that participate in calibrations also varies. When a quantity of channels to be calibrated is relatively large, the multi-channel calibration apparatus provided by this embodiment may be integrated in an ASIC chip, and then a plurality of ASIC chips integrated with multi-channel calibration apparatuses are interconnected by using a high frequency circuit, to calibrate a large quantity of channels.

Considering a structural feature of a beamforming technology on which a multi-channel wireless device is based, a structure of the calibration apparatus is different in an actual application.

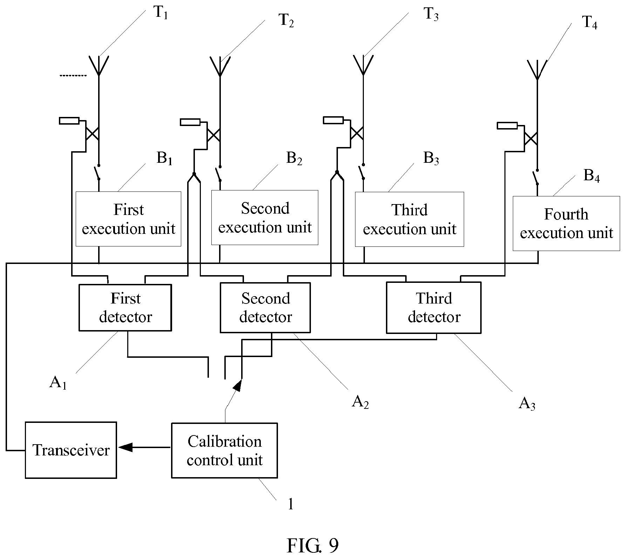

FIG. 9 is a schematic structural diagram of a calibration apparatus applied to an ABF-based multi-channel wireless device according to Embodiment 1.

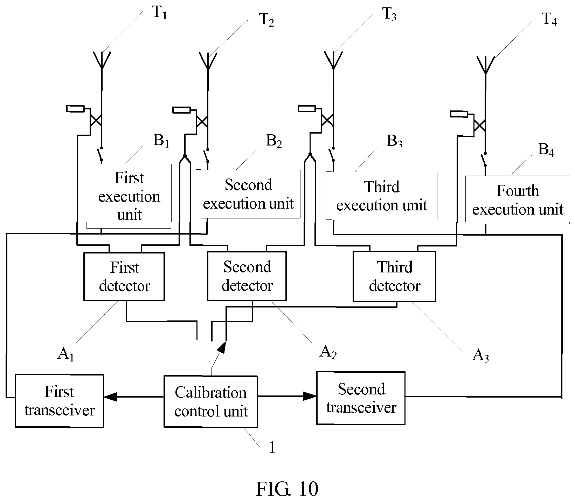

FIG. 10 is a schematic structural diagram of a calibration apparatus applied to an HBF-based multi-channel wireless device according to Embodiment 1.

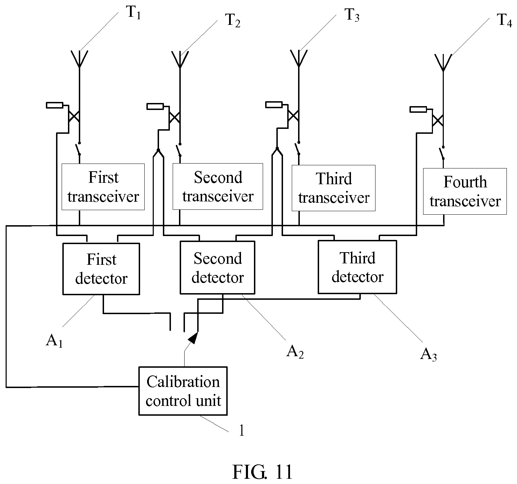

FIG. 11 is a schematic structural diagram of a calibration apparatus applied to a DBF-based multi-channel wireless device according to Embodiment 1. As can be seen from FIG. 9 to FIG. 11, when the calibration apparatus provided by this embodiment of this application is applied to ABF-based, HBF-based, and DBF-based multi-channel wireless devices, design complexity of a high frequency circuit in a calibration feed network can be greatly reduced.

It may be understood that, the execution unit in the foregoing embodiment is configured to adjust an amplitude and/or a phase of each channel, and generally includes a phase shifter and/or an amplitude adjuster. The phase shifter may be an analog phase shifter or a digital phase shifter. The amplitude adjuster may be an analog amplitude adjuster or a digital amplitude adjuster. If the phase shifter is a digital phase shifter, and the amplitude adjuster is a digital amplitude adjuster, when the calibration apparatus is applied to the DBF-based multi-channel wireless device, a digital execution unit included in a transceiver in the DBF-based multi-channel wireless device may be used to implement an amplitude or phase calibration.

### Embodiment 2

This embodiment of this application provides a multi-channel amplitude and/or phase calibration method, applied to transmit channels, and including M' amplitude calibrations or M" phase calibrations.

First, an amplitude calibration is used as an example to describe a multi-channel amplitude calibration method applied to transmit channels according to this embodiment of this application. In the M' amplitude calibrations, two channels are calibrated in each amplitude calibration, channels calibrated in two consecutive amplitude calibrations include a same channel, channels in an m'^{th} amplitude calibration are an r^{th} channel Tᵣ and a k^{th} channel Tₖ, r ≠ k, r and k are both integers greater than or equal to 1 and less than or equal to N, N is a channel quantity, N is an integer greater than or equal to 2, M' is an integer greater than or equal to 1, and m' is an integer greater than or equal to 1 and less than or equal to M'.

A multi-channel calibration apparatus performs a calibration method in the m'^{th} amplitude calibration, as shown in FIG. 4. Specific steps are described in Embodiment 1. Details are not described again herein.

The multi-channel amplitude calibration method provided by this embodiment may be implemented by using the multi-channel calibration apparatus provided by the foregoing Embodiment 1, or may be implemented by using another calibration apparatus.

For example, the following provides specific methods of S101 and S102 in a feasible implementation of the calibration method in the m'^{th} amplitude calibration.

In S101, the detecting a calibration measurement signal on an r^{th} channel Tᵣ and a calibration measurement signal on a k^{th} channel Tₖ, to obtain level signals representing amplitude information of the r^{th} channel Tᵣ and the k^{th} channel Tₖ specifically includes:
detecting the calibration measurement signal on the r^{th} channel Tᵣ, to obtain a detection level representing an amplitude of the r^{th} channel Tᵣ; and
detecting the calibration measurement signal on the k^{th} channel Tₖ, to obtain a detection level representing an amplitude of the k^{th} channel Tₖ.

Further, the r^{th} channel Tᵣ may be further opened and the k^{th} channel Tₖ may be closed, so that the calibration measurement signal on the k^{th} channel Tₖ is detected without interference from the k^{th} channel Tₖ, and that the detection level representing the amplitude of the r^{th} channel Tᵣ is obtained; likewise, the k^{th} channel Tₖ is opened and the r^{th} channel Tᵣ is closed, so that the calibration measurement signal on the k^{th} channel Tₖ is detected without interference from the r^{th} channel Tᵣ, and that the detection level representing the amplitude of the k^{th} channel Tₖ is obtained.

It may be understood that, when the r^{th} channel Tᵣ is opened and the k^{th} channel Tₖ is closed, the calibration measurement signal may be transmitted to the r^{th} channel Tᵣ, or the calibration measurement signals may be transmitted to the r^{th} channel Tᵣ and the k^{th} channel Tₖ. However, because the k^{th} channel Tₖ is closed, independently obtaining the detection level representing the amplitude of the r^{th} channel Tᵣ is ensured.

Likewise, when the k^{th} channel Tₖ is opened and the r^{th} channel Tᵣ is closed, the calibration measurement signal may be transmitted to the k^{th} channel Tₖ, or the calibration measurement signals may be transmitted to the r^{th} channel Tᵣ and the k^{th} channel Tₖ. However, because the r^{th} channel Tᵣ is closed, independently obtaining the detection level representing the amplitude of the k^{th} channel Tₖ is ensured.

Optionally, in S101, before detecting the calibration measurement signal on the r^{th} channel Tᵣ, the method further includes: a transceiver of the r^{th} channel Tᵣ transmits the calibration measurement signal to the r^{th} channel Tᵣ; and before detecting the calibration measurement signal on the k^{th} channel Tₖ, the method further includes: a transceiver of the k^{th} channel Tₖ transmits the calibration measurement signal to the k^{th} channel Tₖ, to avoid an unnecessary hardware structure in the multi-channel calibration apparatus.

Optionally, the multi-channel calibration apparatus may further perform a specific method for obtaining an amplitude calibration coefficient based on the level signals representing the amplitude information of the r^{th} channel Tᵣ and the k^{th} channel Tₖ, as shown in FIG. 7. For a specific implementation process, refer to the descriptions about

FIG. 7 in Embodiment 1. Details are not described again herein.

However, a quantity relationship between an amplitude calibration quantity M' and the channel quantity N may be set based on an actual situation. Given two quantity relationships, the following provides a correspondence between a current amplitude calibration quantity and a sequence number of a current channel being calibrated.

First quantity relationship: M' = N - 1. In this case, referring to FIG. 6, channels calibrated in the m'^{th} amplitude calibration are an m^{th} channel Tₘ and an (m+1)^{th} channel Tₘ₊₁, and channels calibrated in an (m'+1)^{th} amplitude calibration are the (m+1)^{th} channel Tₘ₊₁ and an (m+2)^{th} channel Tₘ₊₂. In hardware implementation, the calibration method with this quantity relationship is applicable to the multi-channel calibration apparatus with the first relationship provided by Embodiment 1. An example of the hardware structure is shown in FIG. 1. For descriptions about a specific amplitude calibration process and principle thereof, refer to the detailed descriptions about FIG. 4, FIG. 6, and FIG. 7 in Embodiment 1.

As can be found from the first quantity relationship, when M' = N - 1, amplitude calibrations of N channels may be completed in N'-1 amplitude calibrations.

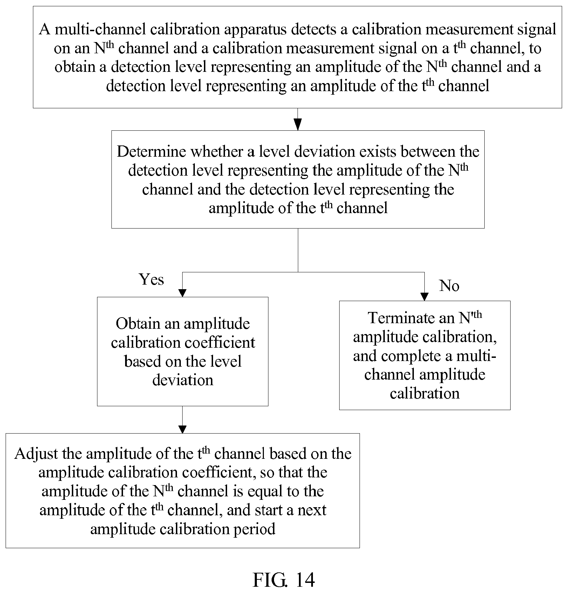

Second quantity relationship: M' = αN. In this case, the amplitude calibration method includes α amplitude calibration periods, and each amplitude calibration period includes N' amplitude calibrations, where N' = N, α is a quantity of the amplitude calibration periods, and α is an integer greater than or equal to 1, where in the N' amplitude calibrations in each amplitude calibration period:
when m' ≤ N - 2, referring to FIG. 6, channels calibrated in the m'^{th} amplitude calibration are an m^{th} channel Tₘ and an (m+1)^{th} channel Tₘ₊₁, and channels calibrated in an (m'+1)^{th} amplitude calibration are the (m+1)^{th} channel Tₘ₊₁ and an (m+2)^{th} channel Tₘ₊₂; or
when m' = N, referring to FIG. 14, channels calibrated in the m'^{th} amplitude calibration are an N^{th} channel T_{N} and a t^{th} channel Tₜ, where 1 ≤ t ≤ N - 2.

Given the second quantity relationship, whether a cumulative error is caused in a plurality of amplitude calibrations may be determined in an N'^{th} amplitude calibration; and if yes, amplitude calibrations may be performed on all channels in a next amplitude calibration period, until no cumulative error exists. Optionally, setting M' = αN and performing the amplitude calibration can avoid the cumulative error caused in a plurality of amplitude calibration processes. In hardware implementation, the calibration method with this quantity relationship is applicable to the multi-channel calibration apparatus with the second relationship provided by Embodiment 1. An example of the hardware structure is shown in FIG. 2. For descriptions about a specific calibration process and principle thereof, refer to the detailed descriptions about FIG. 4, FIG. 6, and FIG. 7 in Embodiment 1.

For example, given the second quantity relationship, FIG. 14 provides a method in an N'^{th} amplitude calibration in each amplitude calibration period, and specific steps are as follows:
Step 1: A multi-channel calibration apparatus detects a calibration measurement signal on an N^{th} channel T_{N} and a calibration measurement signal on a t^{th} channel Tₜ, to obtain a detection level representing an amplitude of the N^{th} channel and a detection level representing an amplitude of the t^{th} channel.
Step 2: Determine whether a level deviation exists between the detection level representing the amplitude of the N^{th} channel and the detection level representing the amplitude of the t^{th} channel; and
   if the level deviation exists, obtain an amplitude calibration coefficient based on the level deviation, adjust the amplitude of the t^{th} channel Tₜ based on the amplitude calibration coefficient, so that the amplitude of the N^{th} channel T_{N} is equal to the amplitude of the t^{th} channel Tₜ, and start a next amplitude calibration period; or
   if the level deviation does not exist, terminate the N'^{th} amplitude calibration, and complete a multi-channel amplitude calibration.

It may be understood that, t may be selected based on an amplitude calibration quantity. Generally, if the amplitude calibration quantity is larger, a cumulative error is larger. Therefore, either of two channels calibrated in a first amplitude calibration is selected as the t^{th} channel Tₜ. For example, when the channels calibrated in the first amplitude calibration include a first channel T₁ and a second channel T₂, t is set to 1 or 2, and in this case, the cumulative error is determined most accurately.

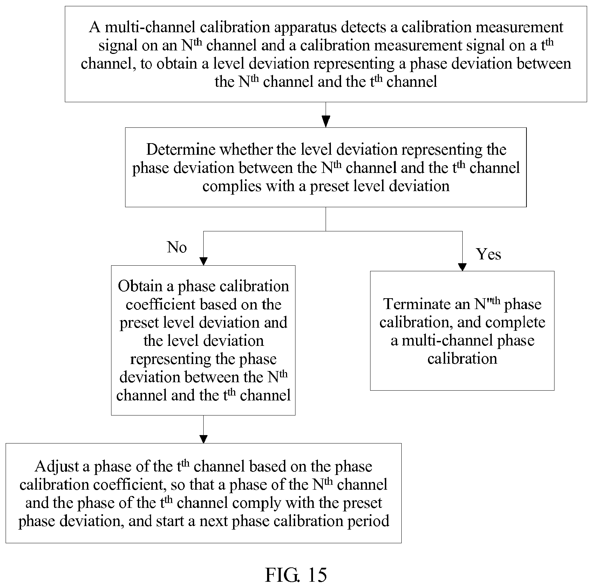

A process of the multi-channel phase calibration method applied to transmit channels according to this embodiment of this application is similar to the process of the foregoing multi-channel amplitude calibration method applied to transmit channels. Refer to FIG. 5, FIG. 6, FIG. 8, FIG. 15, and the detailed descriptions about the phase calibration in Embodiment 1. The following describes only a difference between the phase calibration and the amplitude calibration.

For example, in a feasible implementation of a calibration method in an m"^{th} phase calibration, specific methods of S201 and S202 are provided.

In S201, the detecting a calibration measurement signal on an r^{th} channel Tᵣ and a calibration measurement signal on a k^{th} channel Tₖ, to obtain level signals representing phase information of the r^{th} channel Tᵣ and the k^{th} channel Tₖ specifically includes:
detecting the calibration measurement signal on the r^{th} channel Tᵣ and the calibration measurement signal on the k^{th} channel Tₖ, to obtain a level deviation representing a phase deviation between the r^{th} channel and the k^{th} channel, where the calibration measurement signal on the r^{th} channel Tᵣ is the same as the calibration measurement signal on the k^{th} channel Tₖ. Because the calibration measurement signal on the r^{th} channel Tᵣ is the same as the calibration measurement signal on the k^{th} channel Tₖ, when a detector is used for detection, a detection error caused by a time difference between the calibration measurement signals generated on the two channels can be avoided, and the phase deviation between the two channels can be accurately obtained. Optionally, the r^{th} channel Tᵣ and the k^{th} channel Tₖ may be further opened simultaneously, and the calibration measurement signal on the r^{th} channel Tᵣ and the calibration measurement signal on the k^{th} channel Tₖ are detected simultaneously, so that accuracy of obtaining the phase deviation between the two channels is further improved.

It may be understood that, when the r^{th} channel Tᵣ and the k^{th} channel Tₖ are opened simultaneously, the calibration measurement signals are transmitted to the r^{th} channel Tᵣ and the k^{th} channel Tₖ simultaneously. Therefore, it is ensured that for the obtained level signals representing the phase information of the r^{th} channel Tᵣ and the k^{th} channel Tₖ, no error is generated due to a time difference.

Optionally, in S201, before detecting the calibration measurement signal on the r^{th} channel Tᵣ and the calibration measurement signal on the k^{th} channel Tₖ, the method further includes: a transceiver of the r^{th} channel Tᵣ transmits the calibration measurement signal to the r^{th} channel Tᵣ, and a transceiver of the k^{th} channel Tₖ transmits the calibration measurement signal to the k^{th} channel Tₖ. In this way, an unnecessary hardware module can be reduced, so that a data storage unit storing the calibration measurement signals can be integrated in the calibration apparatus.

It should be noted that, the multi-channel amplitude and/or phase calibration method provided by the foregoing Embodiment 2 is not limited to calibrations of four channels shown in FIG. 1 or FIG. 2. The apparatus can also calibrate more channels. However, as a quantity of channels to be calibrated varies, a phase calibration quantity M" also varies.

### Embodiment 3

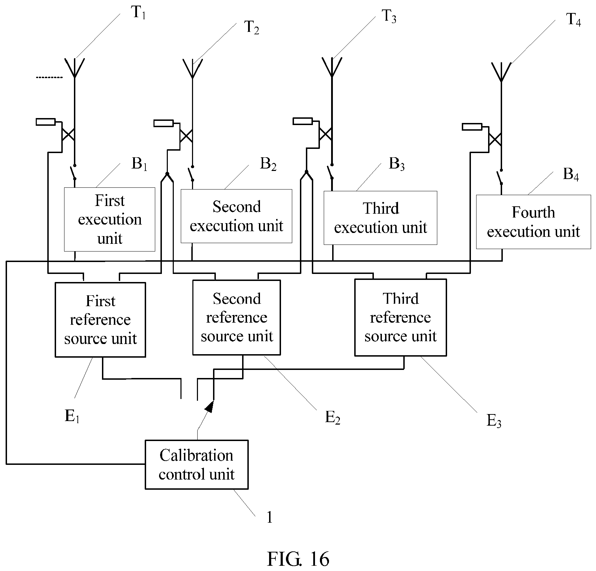

Referring to FIG. 16 to FIG. 18, this embodiment provides a multi-channel calibration apparatus, applied to receive channels, and including a calibration feed unit and a calibration control unit 1 connected to each of N channels, where the calibration feed unit includes Q reference source units, output ends of each reference source unit are coupled to two channels, and output ends of every two reference source units are jointly coupled to one channel.

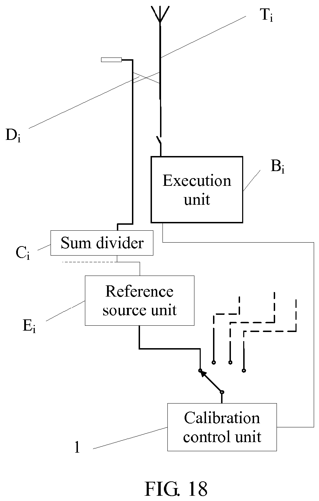

As shown in FIG. 18, Eᵢ represents any reference source unit, and its subscript is a sequence number of the current reference source unit; Tᵢ represents any channel, and its subscript is a sequence number of the current channel; and Bᵢ represents any execution unit, and its subscript is a sequence number of the current execution unit.

An m^{th} reference source unit Eₘ is configured to transmit calibration measurement signals to an r^{th} channel Tᵣ and a k^{th} channel Tₖ, where the calibration measurement signals are used to measure amplitudes and/or phases of the r^{th} channel Tᵣ and the k^{th} channel Tₖ, 1 ≤ m ≤ Q, 1 ≤ r ≤ N, 1 ≤ k ≤ N, r ≠ k, Q is an integer greater than or equal to 1, and N is an integer greater than or equal to 2.

The calibration control unit 1 is configured to obtain an amplitude calibration coefficient in an amplitude calibration based on the amplitudes of the r^{th} channel Tᵣ and the k^{th} channel Tₖ, where the amplitude calibration coefficient is used to calibrate amplitudes of two channels coupled to the m^{th} reference source unit Eₘ, that is, each reference source unit is configured to participate in an amplitude calibration of two channels coupled to the reference source unit; and/or obtain a phase calibration coefficient in a phase calibration based on the phases of the r^{th} channel Tᵣ and the k^{th} channel Tₖ, where the phase calibration coefficient calibrates phases of two channels coupled to the m^{th} reference source unit Eₘ, that is, each reference source unit is configured to participate in a phase calibration of two channels coupled to the reference source unit.

Optionally, a reference source unit may transmit a calibration measurement signal to a corresponding receive channel based on an instruction of a control signal.

Optionally, a calibration measurement signal received by each receive channel is transmitted to a receiver; and a digital unit of the receiver may be used to measure an amplitude and/or a phase of each receive channel based on the calibration measurement signal on each channel.

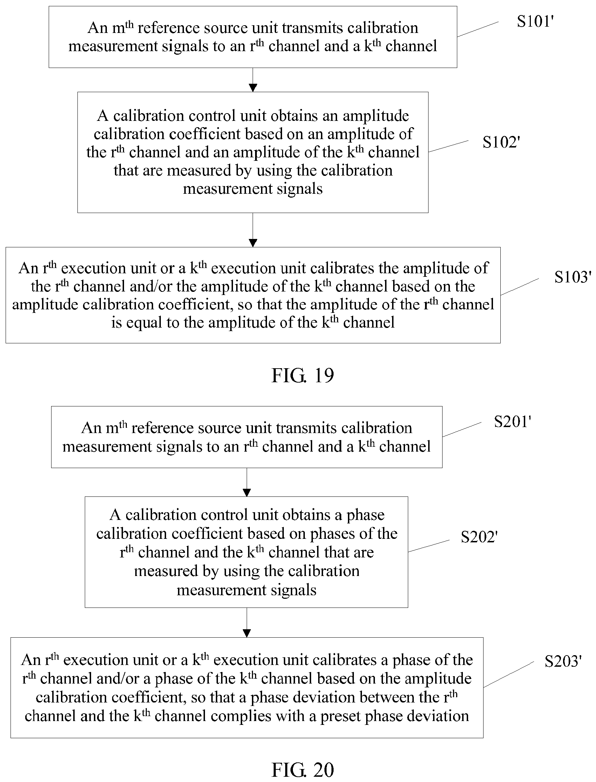

In a specific implementation, a method for calibrating channels by the multi-channel calibration apparatus provided by this embodiment includes a plurality of calibrations. Herein the calibration may be an amplitude calibration or may be a phase calibration. Referring to FIG. 19, channels in an m'^{th} amplitude calibration are an r^{th} channel Tᵣ and a k^{th} channel Tₖ, where r ≠ k, M' is an amplitude calibration quantity, M' is an integer greater than or equal to 1, and m' is an integer greater than or equal to 1 and less than or equal to M'; and a calibration method in the m'^{th} amplitude calibration includes the following steps:
S101'. An m^{th} reference source unit Eₘ transmits calibration measurement signals to an r^{th} channel Tᵣ and a k^{th} channel Tₖ.
S102'. A calibration control unit 1 obtains an amplitude calibration coefficient based on an amplitude of the r^{th} channel Tᵣ and an amplitude of the k^{th} channel Tₖ that are measured by using the calibration measurement signals.
S103'. An r^{th} execution unit Bᵣ and/or a k^{th} execution unit Bₖ adjust/adjusts the amplitude of the r^{th} channel Tᵣ and/or the amplitude of the k^{th} channel Tₖ based on the amplitude calibration coefficient, so that the amplitude of the r^{th} channel Tᵣ is equal to the amplitude of the k^{th} channel Tₖ.

Specifically, when m' = 1, the r^{th} execution unit Bᵣ or the k^{th} execution unit Bₖ adjusts the amplitude of the r^{th} channel Tᵣ and/or the amplitude of the k^{th} channel Tₖ based on the amplitude calibration coefficient, so that the amplitude of the r^{th} channel Tᵣ is equal to the amplitude of the k^{th} channel Tₖ; or
when m' ≥ 2, in the m'^{th} amplitude calibration, the k^{th} execution unit Bᵣ adjusts the amplitude of the r^{th} channel Tᵣ based on the amplitude calibration coefficient, so that the amplitude of the r^{th} channel Tᵣ is equal to the amplitude of the k^{th} channel Tₖ, where the k^{th} channel Tₖ participates in an (m'-1)^{th} amplitude calibration.

Referring to FIG. 20, channels calibrated in an m"^{th} phase calibration are an r^{th} channel Tᵣ and a k^{th} channel Tₖ, where r ≠ k, M" is a phase calibration quantity, M" is an integer greater than or equal to 1, and m" is an integer greater than or equal to 1 and less than or equal to M"; and a calibration method in the m"^{th} phase calibration includes the following steps:
S201'. An m^{th} reference source unit Eₘ transmits calibration measurement signals to an r^{th} channel Tᵣ and a k^{th} channel Tₖ.
S202'. A calibration control unit 1 obtains a phase calibration coefficient based on phases of the r^{th} channel Tᵣ and the k^{th} channel Tₖ that are measured by using the calibration measurement signals.
S203'. An r^{th} execution unit Bᵣ and/or a k^{th} execution unit Bₖ adjust/adjusts a phase of the r^{th} channel Tᵣ and/or a phase of the k^{th} channel Tₖ based on the phase calibration coefficient, so that a phase deviation between the r^{th} channel Tᵣ and the k^{th} channel Tₖ complies with a preset phase deviation.

Specifically, when m" = 1, in the m"^{th} phase calibration, the r^{th} execution unit Bᵣ and/or the k^{th} execution unit Bₖ adjust/adjusts the phase of the r^{th} channel Tᵣ and/or the phase of the k^{th} channel Tₖ based on the phase calibration coefficient, so that the phase deviation between the r^{th} channel Tᵣ and the k^{th} channel Tₖ complies with the preset phase deviation; or
when m" ≥ 2, in the m"^{th} phase calibration, the r^{th} execution unit Bᵣ adjusts the phase of the r^{th} channel Tᵣ based on the phase calibration coefficient, so that the phase deviation between the r^{th} channel Tᵣ and the k^{th} channel Tₖ complies with the preset phase deviation, where the k^{th} channel participates in an (m"-1)^{th} phase calibration.

Regardless of the m'^{th} amplitude calibration or the m"^{th} phase calibration, that the calibration measurement signals are used to measure the amplitudes and/or phases of the r^{th} channel Tᵣ and the k^{th} channel Tₖ means that the calibration measurement signals respectively carry amplitude information and/or phase information of the r^{th} channel Tᵣ and the k^{th} channel Tₖ through the r^{th} channel Tᵣ and the k^{th} channel Tₖ and therefore can be used to measure the amplitudes and/or phases of the r^{th} channel Tᵣ and the k^{th} channel Tₖ. Optionally, a control signal may be used as a control instruction for the m'^{th} reference source unit to transmit the calibration measurement signals, so that the m^{th} reference source unit can transmit the calibration measurement signals to the r^{th} channel Tᵣ and the k^{th} channel Tₖ based on the control signal.

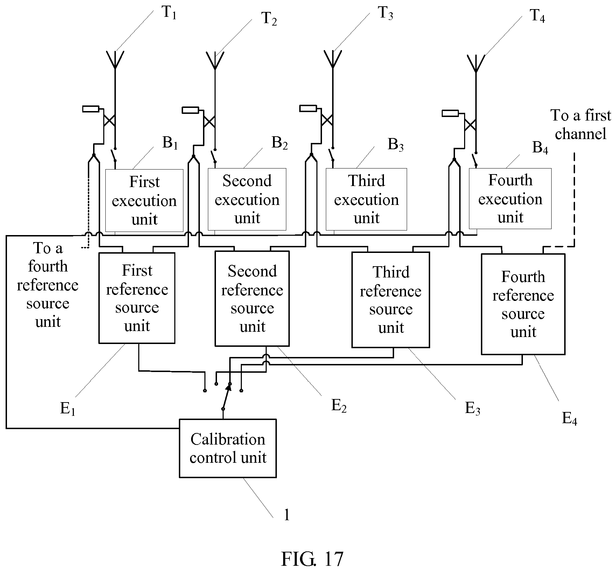

In addition, as can be seen from FIG. 16 and FIG. 17, output ends of each reference source unit are directly coupled to corresponding channels. Therefore, the reference source units do not need to be cascaded; instead, each reference source unit may be arranged in a distributed manner, and can input calibration measurement signals to the channels to measure amplitudes and/or phases of the corresponding channels. Therefore, in comparison with a conventional calibration apparatus, the calibration apparatus provided by this embodiment can effectively reduce a quantity of cascades in a high frequency feed network, and reduce design complexity of the high frequency feed network; in addition, if a channel quantity is larger, advantages of the calibration apparatus provided by this embodiment are more obvious.

In addition, the reference source units are arranged in the distributed manner in the foregoing embodiment, and the reference source units may be integrated in engineering implementation to further reduce volumes and costs; or each reference source unit and the calibration control unit 1 may be integrated in an ASIC chip. Certainly, each reference source unit and the calibration control unit 1 may also be implemented by using discrete components.

It may be understood that, referring to FIG. 18, coupling a channel to an output end of a reference source unit in the foregoing embodiment may be specifically implemented by a coupler and a sum divider, or may be implemented by another existing coupling structure. Specifically, referring to FIG. 16 and FIG. 17, each channel is connected to a sum divider by using a coupler, and each sum divider is connected to output ends of two reference source units.

In FIG. 18, Cᵢ is any sum divider, and its subscript is a sequence number of the current sum divider; and Dᵢ is any coupler, and its subscript is a sequence number of the current coupler. In addition, because each channel is definitely coupled to one reference source unit, if a sequence number of a current channel is determined, a sequence number of a current sum divider and a sequence number of a current coupler are also determined, that is, the sequence number of the current channel, the sequence number of the current sum divider, and the sequence number of the current coupler are the same.

In addition, each channel may have an execution unit adjusting a channel amplitude or phase in the foregoing embodiment, or N execution units correspondingly connected to the N channels may be added to the multi-channel calibration apparatus; each execution unit is further connected to the calibration control unit 1; and each execution unit is configured to adjust, based on an amplitude calibration coefficient, an amplitude of a channel connected to the execution unit, and/or adjust, based on a phase calibration coefficient, a phase of a channel connected to the execution unit. In this way, when the multi-channel calibration apparatus is used to calibrate a channel, the calibration apparatus can not only generate an amplitude calibration coefficient for calibrating an amplitude and/or a phase calibration coefficient for calibrating a phase, but also perform a direct calibration on the channel.

Any execution unit is configured to adjust an amplitude and/or a phase of a channel connected to the execution unit, and generally includes a phase shifter and/or an amplitude adjuster. The phase shifter may be an analog phase shifter or a digital phase shifter. The amplitude adjuster may be an analog amplitude adjuster or a digital amplitude adjuster.

In addition, an added execution unit, and a coupler and a sum divider for connecting a channel to an output end of a reference source unit may be further integrated in an ASIC chip integrated with the reference source unit and the calibration control unit 1, so that miniaturization of the multi-channel calibration apparatus is implemented; or an added execution unit, and a coupler and a sum divider for connecting a channel to an input port of a reference source unit may be independently integrated into another ASIC chip, and connected to an ASIC chip integrated with a detector and the calibration control unit 1.

Further, considering that each reference source unit participates in a calibration of two channels, a reference source quantity Q in the multi-channel calibration apparatus provided by the foregoing embodiment is inseparable from the channel quantity N, and both the amplitude calibration quantity M' and the phase calibration quantity M" are related to the reference source unit quantity Q. The following describes a relationship between the detector quantity, the channel quantity, and the calibration quantity with reference to accompanying drawings.

First relationship: Q = N - 1, that is, the reference source unit quantity Q is one less than the channel quantity N, but because each reference source unit participates in a channel calibration, both the amplitude calibration quantity M' and the phase calibration quantity M" are equal to N-1.

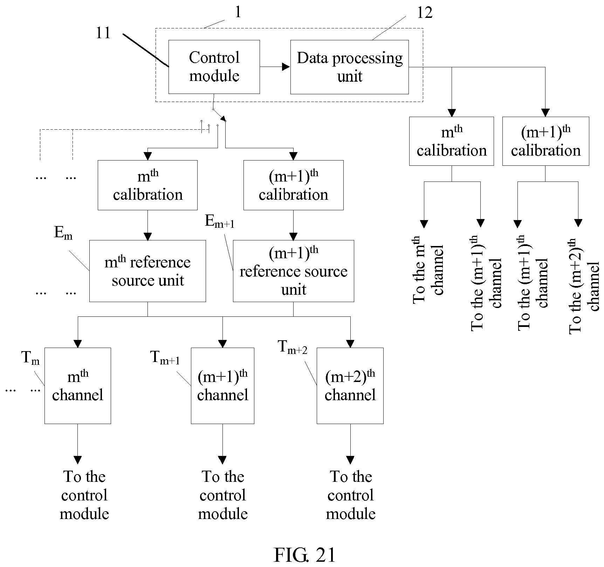

A sequence of channel calibrations is related to a coupling relationship between a detector and a channel. For example, referring to FIG. 21, the channels coupled to the m^{th} reference source unit Eₘ are an m^{th} channel Tₘ and an (m+1)^{th} channel Tₘ₊₁, that is, the m^{th} reference source unit Eₘ participates in an amplitude calibration and/or a phase calibration of the m^{th} channel Tₘ and the (m+1)^{th} channel Tₘ₊₁; and channels coupled to an (m+1)^{th} reference source unit are the (m+1)^{th} channel Tₘ₊₁ and an (m+2)^{th} channel Tₘ₊₂, that is, the (m+1)^{th} reference source unit Eₘ₊₁ participates in an amplitude calibration and/or a phase calibration of the (m+1)^{th} channel Tₘ₊₁ and the (m+2)^{th} channel Tₘ₊₂, where m ≤ N - 2. In this case, because the m^{th} reference source unit Eₘ participates in the amplitude calibration and/or the phase calibration of the m^{th} channel Tₘ and the (m+1)^{th} channel Tₘ₊₁, and the channels coupled to the (m+1)^{th} reference source unit Eₘ₊₁ are the (m+1)^{th} channel Tₘ₊₁ and the (m+2)^{th} channel Tₘ₊₂, obviously, channels coupled to two adjacent reference source units are arranged in sequence. This can reduce complexity of cabling between each reference source unit and a channel coupled to the reference source unit, and further reduce requirements on design specifications and difficulty in engineering implementation.

For example, given the first relationship, FIG. 16 is a first schematic structural diagram of the multi-channel calibration apparatus applied to receive channels according to this embodiment, where the channel quantity N is 4, the reference source unit quantity Q is 3, output ends of a first reference source unit E₁ are coupled to a first channel T₁ and a second channel T₂, output ends of a second reference source unit E₂ are coupled to the second channel T₂ and a third channel T₃, and input ends of a third reference source unit E₃ are coupled to the third channel T₃ and a fourth channel T₄.

Referring to FIG. 19 and FIG. 21, in a first amplitude calibration, the first reference source unit E₁ participates in the amplitude calibration of the first channel T₁ and the second channel T₂; in a second amplitude calibration, the second reference source unit E₂ participates in the amplitude calibration of the second channel T₂ and the third channel T₃; and in a third amplitude calibration, the third reference source unit E₃ participates in the amplitude calibration of the third channel T₃ and the fourth channel T₄.

Referring to FIG. 20 and FIG. 21, in phase calibrations, in a first phase calibration, the first reference source unit E₁ completes the phase calibration of the first channel T₁ and the second channel T₂; in a second phase calibration, the second reference source unit E₂ completes the phase calibration of the second channel T₂ and the third channel T₃; and in a third phase calibration, the third reference source unit E₃ completes the phase calibration of the third channel T₃ and the fourth channel T₄.

Second relationship: Q = N, that is, the reference source unit quantity Q is equal to the channel quantity N, but because each reference source unit participates in a channel calibration, both the amplitude calibration quantity M' and the phase calibration quantity M" should be at least N. A sequence of channel calibrations is related to a coupling relationship between a detector and a channel, for example,
when a sequence number of a current reference source unit is m ≤ N - 2, referring to FIG. 21, the channels coupled to the m^{th} reference source unit Eₘ are an m^{th} channel Tₘ and an (m+1)^{th} channel Tₘ₊₁, that is, the m^{th} reference source unit Eₘ participates in an amplitude calibration and/or a phase calibration of the m^{th} channel Tₘ and the (m+1)^{th} channel Tₘ₊₁; and channels coupled to an (m+1)^{th} reference source unit Eₘ₊₁ are the (m+1)^{th} channel Tₘ₊₁ and an (m+2)^{th} channel Tₘ₊₂, that is, the (m+1)^{th} reference source unit Eₘ₊₁ participates in an amplitude calibration and/or a phase calibration of the (m+1)^{th} channel Tₘ₊₁ and the (m+2)^{th} channel Tₘ₊₂; or
when a sequence number of a current reference source unit is m = N, the channels coupled to the m^{th} reference source unit Eₘ are an N^{th} channel T_{N} and a t^{th} channel Tₜ, where 1 ≤ t ≤ N - 2, that is, the N^{th} reference source unit E_{N} participates in a calibration of the N^{th} channel T_{N} and the t^{th} channel Tₜ.

For descriptions about selection of t and a cumulative error, refer to the descriptions in Embodiment 2. Details are not described again herein.

For example, given the second relationship, FIG. 17 is a second schematic structural diagram of the multi-channel calibration apparatus applied to transmit channels according to this embodiment, where the channel quantity N is 4, the reference source unit quantity Q is 4, output ends of a first reference source unit E₁ are coupled to a first channel T₁ and a second channel T₂, output ends of a second reference source unit E₂ are coupled to the second channel T₂ and a third channel T₃, output ends of a third reference source unit E₃ are coupled to the third channel T₃ and a fourth channel T₄, and output ends of a fourth reference source unit E₄ are coupled to the fourth channel T₄ and the first channel T₁.

In amplitude calibrations, in a first amplitude calibration, the first reference source unit E₁ participates in the amplitude calibration of the first channel T₁ and the second channel T₂; in a second amplitude calibration, the second reference source unit E₂ participates in the amplitude calibration of the second channel T₂ and the third channel T₃; in a third amplitude calibration, the third reference source unit E₃ participates in the amplitude calibration of the third channel T₃ and the fourth channel T₄; and in a fourth amplitude calibration, the fourth reference source unit E₄ participates in the amplitude calibration of the fourth channel T₄ and the first channel T₁. If it is found in this step that an amplitude deviation exists between amplitudes of the fourth channel T₄ and the first channel T₁ that are measured by using calibration measurement signals, it indicates that a cumulative error exists in first three amplitude calibrations, and therefore, the fourth reference source unit E₄ is used to participate in the amplitude calibration of the fourth channel T₄ and the first channel T₁, and the process returns to the first amplitude calibration to restart an amplitude calibration, until amplitudes of the fourth channel T₄ and the first channel T₁ are consistent; or if it is found in this step that amplitudes of the fourth channel T₄ and the first channel T₁ are consistent, it indicates that no cumulative error exists, and the amplitude calibration is terminated.

In phase calibrations, in a first phase calibration, the first reference source unit E₁ participates in the phase calibration of the first channel T₁ and the second channel T₂; in a second phase calibration, the second reference source unit E₂ participates in the phase calibration of the second channel T₂ and the third channel T₃; in a third phase calibration, the third reference source unit E₃ participates in the phase calibration of the third channel T₃ and the fourth channel T₄; and in a fourth phase calibration, the fourth reference source unit E₄ participates in the phase calibration of the fourth channel T₄ and the first channel T₁. If it is found in this step that a phase deviation existing between phases of the fourth channel T₄ and the first channel T₁ that are measured by using calibration measurement signals does not comply with the preset phase deviation, it indicates that a cumulative error exists in first three phase calibrations, and therefore, the fourth reference source unit E₄ is used to participate in the phase calibration of the fourth channel T₄ and the first channel T₁, and the process returns to the first phase calibration to restart a phase calibration, until a phase deviation existing between phases of the fourth channel T₄ and the first channel T₁ that are measured by using calibration measurement signals complies with the preset phase deviation. In this case, it indicates that no cumulative error exists, and the phase calibration is terminated.

As can be found from the descriptions about the amplitude calibration process and the phase calibration process of the multi-channel calibration apparatus shown in FIG. 17, the second calibration uses the second channel T₂ in the first calibration as a basis to adjust the third channel T₃ and calibrate the second channel T₂ and the third channel T₃; the third calibration uses the third channel T₃ in the second calibration as a basis to adjust the fourth channel T₄ and calibrate the third channel T₃ and the fourth channel T₄; and the fourth calibration uses the fourth channel T₄ in the third calibration as a basis to adjust the first channel T₁ and calibrate the fourth channel T₄ and the first channel T₁.

It should be noted that, the calibration measurement signals in the foregoing embodiment can be directly received by the channels, and the calibration measurement signals should be high frequency signals, but the control signal used as a control instruction for transmitting the calibration measurement signals may be generated by an additional control instruction generation device or may be controlled by the calibration control unit.

In a preferred implementation, to facilitate hardware implementation, the control signal of the reference source unit in the foregoing embodiment is provided by the calibration control unit 1, and the control signal is generally a low frequency signal.

FIG. 21 shows a structure of the calibration control unit 1 in the foregoing embodiment. The calibration control unit 1 includes a control module 11 and a data processing module 12, where output ends of the control module 11 are connected to input ports of Q reference source units respectively, and the data processing module 12 is connected to each of N channels.

The control module 11 is configured to transmit a control signal to an m^{th} reference source unit Eₘ, and control the data processing module 12 to obtain amplitudes of an r^{th} channel Tᵣ and a k^{th} channel Tₖ in an amplitude calibration, and/or to obtain phases of an r^{th} channel Tᵣ and a k^{th} channel Tₖ in a phase calibration.

The data processing module 12 is configured to obtain an amplitude calibration coefficient based on the amplitudes of the r^{th} channel and the k^{th} channel in the amplitude calibration, and/or obtain a phase calibration coefficient based on a preset phase deviation and a phase deviation existing between the phases of the r^{th} channel and the k^{th} channel.

Specifically, the data processing module 12 determines, in the amplitude calibration, whether an amplitude deviation exists between the amplitudes of the r^{th} channel Tᵣ and the k^{th} channel Tₖ that are measured by using calibration measurement signals, and if the amplitude deviation exists, obtains the amplitude calibration coefficient based on the amplitude deviation; and/or determines, in the phase calibration, whether the phase deviation existing between the phases of the r^{th} channel Tᵣ and the k^{th} channel Tₖ complies with the preset phase deviation, and if the phase deviation does not comply with the preset phase deviation, obtains the phase calibration coefficient based on the preset phase deviation and the phase deviation existing between the phases of the r^{th} channel Tᵣ and the k^{th} channel Tₖ.

The control module 11 is further configured to control, in the amplitude calibration, the data processing module 12 to transmit the amplitude calibration coefficient to an execution unit, so that the execution unit adjusts, based on the amplitude calibration coefficient, amplitudes of channels coupled to the m^{th} reference source unit Eₘ, and/or control, in the phase calibration, the data processing module 12 to transmit the phase calibration coefficient to an execution unit, so that the execution unit adjusts, based on the phase calibration coefficient, phases of channels coupled to the m^{th} reference source unit Eₘ.

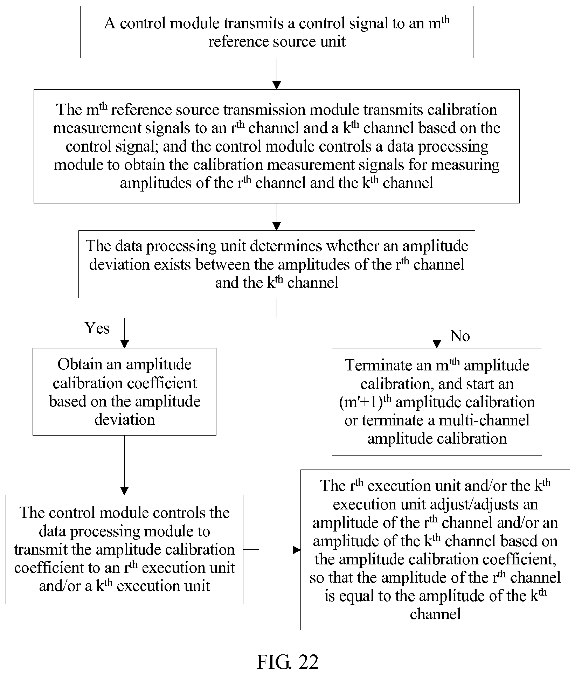

Referring to FIG. 22, a work process in an m'^{th} amplitude calibration is as follows:
Step 1: A control module 11 transmits a control signal to an m^{th} reference source unit Em.
Step 2: The m^{th} reference source unit Eₘ transmits calibration measurement signals to an r^{th} channel Tᵣ and a k^{th} channel Tₖ based on the control signal.
Step 3: The control module 11 controls a data processing unit 12 to obtain amplitudes of the r^{th} channel and the k^{th} channel, and the data processing unit 12 determines whether an amplitude deviation exists between the amplitudes of the r^{th} channel Tᵣ and the k^{th} channel Tₖ; and
   if yes, obtain an amplitude calibration coefficient based on the amplitude deviation, and go to step 4; or if no, terminate the m'^{th} amplitude calibration, and start an (m'+1)^{th} amplitude calibration.
Step 4: The control module 11 controls the data processing module 12 to transmit the amplitude calibration coefficient to an r^{th} execution unit Bᵣ and/or a k^{th} execution unit Bₖ.
Step 5: The r^{th} execution unit Bᵣ or the k^{th} execution unit Bₖ adjusts an amplitude of the r^{th} channel Tᵣ and/or an amplitude of the k^{th} channel Tₖ based on the amplitude calibration coefficient, so that the amplitude of the r^{th} channel Tᵣ is equal to the amplitude of the k^{th} channel Tₖ.

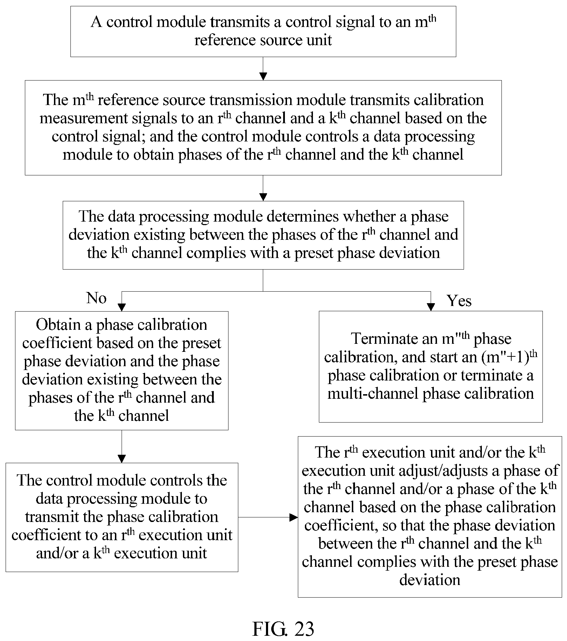

Referring to FIG. 23, a work process in an m"^{th} phase calibration is as follows:
Step 1: A control module 11 transmits a control signal to an m^{th} reference source unit Em.
Step 2: The m^{th} reference source unit Eₘ transmits calibration measurement signals to an r^{th} channel Tᵣ and a k^{th} channel Tₖ based on the control signal.
Step 3: The control module 11 controls a data processing module 12 to obtain phases of the r^{th} channel and the k^{th} channel, and the data processing module 12 determines whether a phase deviation existing between the phases of the r^{th} channel Tᵣ and the k^{th} channel Tₖ complies with a preset phase deviation; and
   if yes, terminate the m"^{th} phase calibration, and start an (m"+1)^{th} phase calibration; or
   if no, obtain a phase calibration coefficient based on the preset phase deviation and the phase deviation existing between the phases of the r^{th} channel Tᵣ and the k^{th} channel Tₖ, and go to step 4.
Step 4: The control module 11 controls the data processing module 12 to transmit the phase calibration coefficient to an r^{th} execution unit Bᵣ and/or a k^{th} execution unit Bₖ.
Step 5: The r^{th} execution unit Bᵣ or the k^{th} execution unit Bₖ adjusts a phase of the r^{th} channel Tᵣ and/or a phase of the k^{th} channel Tₖ based on the phase calibration coefficient, so that the phase deviation between the r^{th} channel Tᵣ and the k^{th} channel Tₖ complies with the preset phase deviation.

In this implementation, the control module 11 transmits the control signal to the m^{th} reference source unit Eₘ, so that the m^{th} reference source unit Eₘ can transmit the calibration measurement signals to the r^{th} channel Tᵣ and the k^{th} channel Tₖ based on the control signal. Therefore, it can be ensured that the current reference source unit directly transmits, under control of the control module 11, the calibration measurement signals to the two corresponding channels, and transmission of the calibration measurement signals to the two corresponding channels by the current reference source unit can be controlled.

In addition, the starting the m'^{th} amplitude calibration or the m"^{th} phase calibration is implemented by the control module 11 by transmitting a control signal to the m^{th} reference source unit Eₘ, and the starting the (m'+1)^{th} amplitude calibration is implemented by the control module 11 by transmitting a control signal to an (m+1)^{th} reference source unit Eₘ₊₁.

In addition, the multi-channel calibration apparatus provided by the foregoing embodiment is not limited to calibrations of four channels shown in FIG. 1 or FIG. 2. The apparatus can also calibrate more channels. However, as a quantity of channels to be calibrated varies, a quantity of reference source units that participate in calibrations also varies. When a quantity of channels to be calibrated is relatively large, the multi-channel calibration apparatus provided by this embodiment may be integrated in an ASIC chip, and then a plurality of ASIC chips integrated with multi-channel calibration apparatuses are interconnected by using a high frequency circuit, to calibrate a large quantity of channels.

Considering a structural feature of a beamforming technology on which a multi-channel wireless device is based, a structure of the multi-channel calibration apparatus provided by this embodiment is different in an actual application.

Specifically, the multi-channel calibration apparatus provided by this embodiment may also be applied to ABF-based, HBF-based, and DBF-based multi-channel wireless devices. A specific schematic structural diagram and a principle are similar to those in FIG. 9 to FIG. 11, and a difference lies in that the detectors in FIG. 9 to FIG. 11 are replaced with reference source units in this embodiment. Details are not described again herein.

### Embodiment 4

This embodiment of this application provides a multi-channel amplitude and/or phase calibration method, applied to receive channels, and the calibration method includes M' amplitude calibrations and/or M" phase calibrations.

First, an amplitude calibration is used as an example to describe a multi-channel amplitude calibration method applied to receive channels according to this embodiment of this application. In the M' amplitude calibrations, two channels are calibrated in each amplitude calibration, channels calibrated in two consecutive amplitude calibrations include a same channel, channels in an m'^{th} amplitude calibration are an r^{th} channel Tᵣ and a k^{th} channel Tₖ, r ≠ k, r and k are both integers greater than or equal to 1 and less than or equal to N, N is a channel quantity, N is an integer greater than or equal to 2, M' is an integer greater than or equal to 1, and m' is an integer greater than or equal to 1 and less than or equal to M'.

A multi-channel calibration apparatus performs a calibration method in the m'^{th} amplitude calibration, as shown in FIG. 19. Specific steps are described in Embodiment 3. Details are not described again herein.

The multi-channel amplitude calibration method provided by this embodiment may be implemented by using the calibration apparatus provided by the foregoing Embodiment 3, or may be implemented by using another calibration apparatus.

For example, the following provides specific methods of S101' and S102' in a feasible implementation of the calibration method in the m'^{th} amplitude calibration.

In SI01', the transmitting calibration measurement signals to an r^{th} channel Tᵣ and a k^{th} channel Tₖ specifically includes:
transmitting a calibration measurement signal to the r^{th} channel Tᵣ; and
transmitting a calibration measurement signal to the k^{th} channel Tₖ. Further, the r^{th} channel Tᵣ is opened, and the k^{th} channel Tₖ is closed; and a high frequency calibration measurement signal is transmitted to the r^{th} channel Tᵣ based on a control signal, to ensure that an amplitude of the r^{th} channel Tᵣ is independently measured. In addition, when the r^{th} channel Tᵣ is opened and the k^{th} channel Tₖ is closed, a high frequency calibration measurement signal may be transmitted to the r^{th} channel Tᵣ, or high frequency calibration measurement signals may be transmitted to the r^{th} channel Tᵣ and the k^{th} channel Tₖ simultaneously.

Likewise, the k^{th} channel Tₖ is opened, and the r^{th} channel Tᵣ is closed, to ensure that an amplitude of the k^{th} channel Tₖ is independently measured. In addition, when the k^{th} channel Tₖ is opened and the r^{th} channel Tᵣ is closed, calibration measurement signals may also be transmitted to the r^{th} channel Tᵣ and the k^{th} channel Tₖ simultaneously, so that interference of calibration measurement signals between different channels is avoided.

Optionally, the r^{th} channel Tᵣ and the k^{th} channel Tₖ may also be opened simultaneously, and this is not limited in this application.

Optionally, in S101', after the r^{th} channel Tᵣ is opened and the k^{th} channel Tₖ is closed, and before the calibration measurement signal is transmitted to the r^{th} channel based on the control signal, the method further includes: obtaining the control signal, so that transmission of the calibration measurement signal to the channel can be controlled.

Optionally, the multi-channel calibration apparatus may further perform a specific method for obtaining an amplitude calibration coefficient based on amplitudes of the r^{th} channel Tᵣ and the k^{th} channel Tₖ, as shown in FIG. 22. For a specific implementation process, refer to the descriptions about FIG. 22 in Embodiment 3. Details are not described again herein.

However, a quantity relationship between an amplitude calibration quantity M' and the channel quantity N may be set based on an actual situation. Given two quantity relationships, the following provides a correspondence between a current amplitude calibration quantity and a sequence number of a current channel being calibrated.

First quantity relationship: M' = N - 1. In this case, referring to FIG. 21, channels calibrated in the m'^{th} amplitude calibration are an m^{th} channel Tₘ and an (m+1)^{th} channel Tₘ₊₁, and channels calibrated in an (m'+1)^{th} amplitude calibration are the (m+1)^{th} channel Tₘ₊₁ and an (m+2)^{th} channel Tₘ₊₂. In hardware implementation, the calibration method with this quantity relationship is applicable to the multi-channel calibration apparatus with the first relationship provided by Embodiment 3. An example of the hardware structure is shown in FIG. 16. For descriptions about a specific amplitude calibration process and principle thereof, refer to the detailed descriptions about FIG. 19, FIG. 21, and FIG. 22 in Embodiment 3.

As can be found from the first quantity relationship, when M' = N - 1, amplitude calibrations of N channels may be completed in N-1 amplitude calibrations.

Second quantity relationship: M' = αN. In this case, the amplitude calibration method includes α amplitude calibration periods, and each amplitude calibration period includes N' amplitude calibrations, where N' = N, α is a quantity of the amplitude calibration periods, and α is an integer greater than or equal to 1, where in the N' amplitude calibrations in each amplitude calibration period:
when m' ≤ N - 2, referring to FIG. 21, channels calibrated in the m'^{th} amplitude calibration are an m^{th} channel Tₘ and an (m+1)^{th} channel Tₘ₊₁, and channels calibrated in an (m'+1)^{th} amplitude calibration are the (m+1)^{th} channel Tₘ₊₁ and an (m+2)^{th} channel Tₘ₊₂; or
when m' = N, channels calibrated in the m'^{th} amplitude calibration are an N^{th} channel T_{N} and a t^{th} channel Tₜ, where 1 ≤ t ≤ N - 2.

In hardware implementation, the calibration method with this quantity relationship is applicable to the multi-channel calibration apparatus with the second relationship provided by Embodiment 3. An example of the hardware structure is shown in FIG 17. For descriptions about a specific calibration process and principle thereof, refer to the detailed descriptions about FIG. 19, FIG. 21, and FIG. 22 in Embodiment 3.

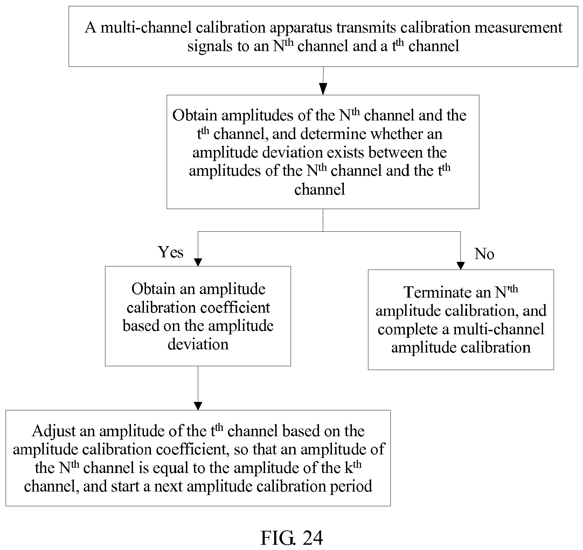

For example, given the second quantity relationship, FIG. 24 provides a method in an N'^{th} amplitude calibration in each amplitude calibration period, and specific steps are as follows:
Step 1: A multi-channel calibration apparatus transmits calibration measurement signals to an N^{th} channel T_{N} and a t^{th} channel Tₜ, so that the calibration measurement signals are used to measure amplitudes of the N^{th} channel T_{N} and the t^{th} channel Tₜ.
Step 2: Obtain the amplitudes of the N^{th} channel T_{N} and the t^{th} channel Tₜ, and determine whether an amplitude deviation exists between the amplitudes of the N^{th} channel T_{N} and the t^{th} channel Tₜ; and
   if the amplitude deviation exists, obtain an amplitude calibration coefficient based on the amplitude deviation, adjust an amplitude of the t^{th} channel Tₜ based on the amplitude calibration coefficient, so that an amplitude of the N^{th} channel T_{N} is equal to the amplitude of the t^{th} channel Tₜ, and start a next amplitude calibration period; or
   if the amplitude deviation does not exist, terminate the N'^{th} calibration, and complete a multi-channel amplitude calibration.

For selection of t, refer to detailed descriptions of Embodiment 2. Details are not described again herein.

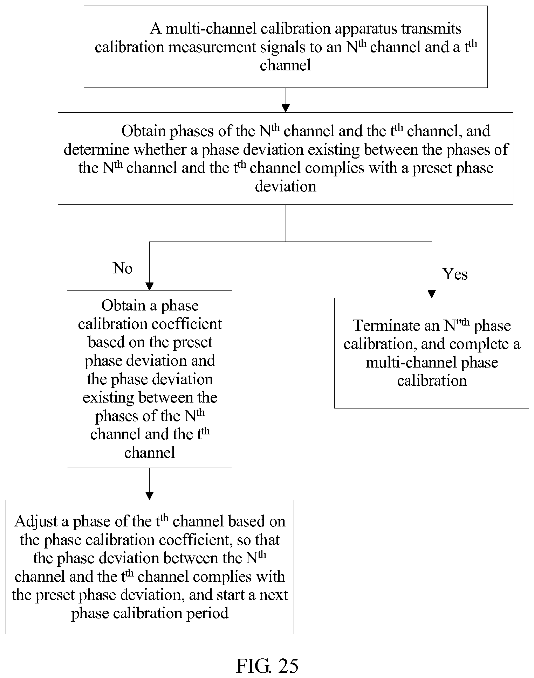

A process of the multi-channel phase calibration method applied to receive channels according to this embodiment of this application is similar to the process of the foregoing multi-channel amplitude calibration method applied to receive channels. Refer to FIG. 20, FIG. 21, FIG. 23, FIG. 25, and the detailed descriptions about the phase calibration in Embodiment 1. The following describes only a difference between the phase calibration and the amplitude calibration. For example, the following provides specific methods of S201' and S202' in a feasible implementation of a calibration method in an m"^{th} phase calibration.

In S201', the transmitting calibration measurement signals to an r^{th} channel Tᵣ and a k^{th} channel Tₖ includes:
opening the r^{th} channel Tᵣ and the k^{th} channel Tₖ simultaneously, and transmitting high frequency calibration measurement signals to the r^{th} channel Tᵣ and the k^{th} channel Tₖ respectively.

In this implementation, by defining the calibration measurement signals entering the r^{th} channel Tᵣ and the k^{th} channel Tₖ simultaneously, a phase measurement error caused by a time error between the calibration measurement signals entering the r^{th} channel Tᵣ and the k^{th} channel Tₖ can be avoided.

In addition, when phases of the r^{th} channel Tᵣ and the k^{th} channel Tₖ are measured by using the calibration measurement signals, the calibration measurement signals enter the r^{th} channel Tᵣ and the k^{th} channel Tₖ respectively, and there is no interference between the measurement processes, but there is an intersection in a process of obtaining a phase calibration coefficient based on the phases of the r^{th} channel Tᵣ and the k^{th} channel Tₖ that are measured by using the calibration measurement signals. Therefore, the r^{th} channel Tᵣ and the k^{th} channel Tₖ may also be opened independently.

To be specific, when the r^{th} channel Tᵣ is closed and the k^{th} channel Tₖ is opened, a high frequency calibration measurement signal is transmitted to the k^{th} channel Tₖ based on a low frequency control signal, or when the r^{th} channel Tᵣ is opened and the k^{th} channel Tₖ is closed, a high frequency calibration measurement signal may be transmitted to the r^{th} channel Tᵣ based on a low frequency control signal. However, in this method, a time error may exist during a phase measurement.

Optionally, in S201', before transmitting the calibration measurement signals to the r^{th} channel Tᵣ and the k^{th} channel Tₖ respectively based on the control signal, the method further includes: obtaining the control signal, so that transmission of the calibration measurement signals can be controlled.

It should be noted that, the multi-channel amplitude and/or phase calibration method provided by the foregoing Embodiment 4 is not limited to calibrations of four channels shown in FIG. 16 or FIG. 17. The apparatus can also calibrate more channels. However, as a quantity of channels to be calibrated varies, a phase calibration quantity M" also varies.

### Example 5

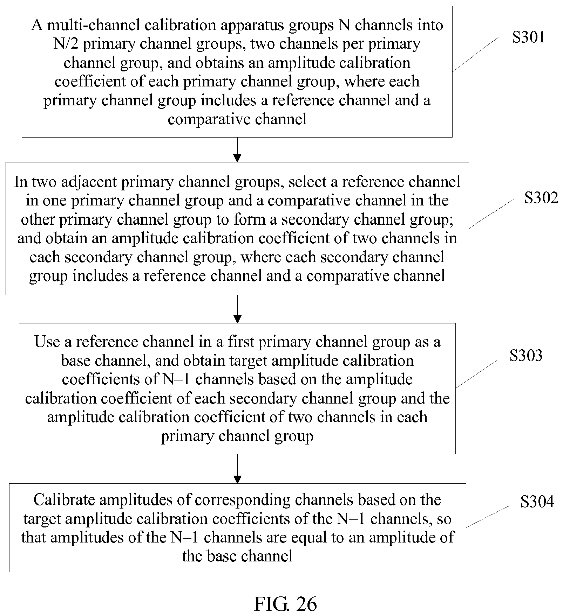

Referring to FIG. 26, this embodiment of this application provides a multi-channel amplitude calibration method, where a quantity of calibrated channels is N, and N is an even number. The multi-channel amplitude calibration method is a parallel channel calibration method in essence, and the multi-channel amplitude calibration method specifically includes the following steps.

S301. A multi-channel calibration apparatus groups N channels into N/2 primary channel groups, two channels per primary channel group, and obtains an amplitude calibration coefficient of each primary channel group according to S101 and S102 in the multi-channel amplitude calibration method provided by Embodiment 2 or S101' and S102' in the multi-channel amplitude calibration method provided by Embodiment 4, where each primary channel group includes a reference channel and a comparative channel.

S302. In two adjacent primary channel groups, select a reference channel in one primary channel group and a comparative channel in the other primary channel group to form a secondary channel group; and obtain an amplitude calibration coefficient of two channels in each secondary channel group according to S101 and S102 in the multi-channel amplitude calibration method provided by Embodiment 2 and/or S101' and S102' in the multi-channel amplitude calibration method provided by Embodiment 4, where all primary channel groups can form N/2-1 secondary channel groups, a reference channel in a first primary channel group and a comparative channel in an (N/2)^{th} primary channel group do not participate in formation of a secondary channel group, and each secondary channel group includes a reference channel and a comparative channel.

S303. Use the reference channel in the first primary channel group as a base channel, and obtain target amplitude calibration coefficients of N-1 channels based on the amplitude calibration coefficient of each secondary channel group and the amplitude calibration coefficient of two channels in each primary channel group, where the N-1 channels do not include the base channel.

S304. Calibrate amplitudes of corresponding channels based on the target amplitude calibration coefficients of the N-1 channels, so that amplitudes of the N-1 channels are equal to an amplitude of the base channel.

If the multi-channel amplitude calibration method provided by this embodiment is applied to transmit channels, the method may be implemented by using the multi-channel calibration apparatus provided by Embodiment 1. If the method is applied to receive channels, the method may be implemented by using the multi-channel calibration apparatus provided by Embodiment 3.

It may be understood that, for the base channel, the amplitude of the reference channel in the primary channel group is used as a target amplitude, and the amplitude calibration coefficients of the N-1 channels are obtained based on the amplitude calibration coefficient of each secondary channel group and the amplitude calibration coefficient of each primary channel group; and the amplitudes of the corresponding channels are calibrated by using the amplitude calibration coefficients of the N-1 channels, so that the amplitudes of the N-1 channels are equal to the target amplitude. It should be noted that, the amplitude calibration coefficients of the primary channel groups may be calculated at different times, or may be calculated at a same time. A calibration time can be reduced when the amplitude calibration coefficients of the primary channel groups are calculated at the same time.

Likewise, the amplitude calibration coefficients of the secondary channel groups may be obtained at different times, or may be obtained at a same time. Optionally, after the amplitude calibration coefficients of the primary channel groups are obtained at the same time, the amplitude calibration coefficients of the secondary channel groups are obtained at the same time. In this way, to obtain the target amplitude calibration coefficients and complete calibrations of all channels, it is only necessary to synchronously obtain the amplitude calibration coefficients twice and then simply calculate the amplitude calibration coefficients of the channels.

In addition, in this embodiment, during calculation of an amplitude calibration coefficient, an amplitude of a reference channel is used as a divisor, an amplitude of a comparative channel is used as a dividend, and a division operation can be performed to obtain the amplitude calibration coefficient. The reference channel and the comparative channel are set merely for distinguishing usage thereof as a divisor or a dividend during calculation of the amplitude calibration coefficient. Whether a channel is set as a reference channel or a comparative channel is determined based on a specific requirement. This is not limited in this application.

To explain the multi-channel calibration method according to this embodiment more clearly, an example is provided to explain how the multi-channel calibration apparatus provided in FIG. 1 implements the multi-channel calibration apparatus provided by this embodiment.

In FIG. 1, four channels are included, and are respectively a first channel T₁, a second channel T₂, a third channel T₃, and a fourth channel T₄.

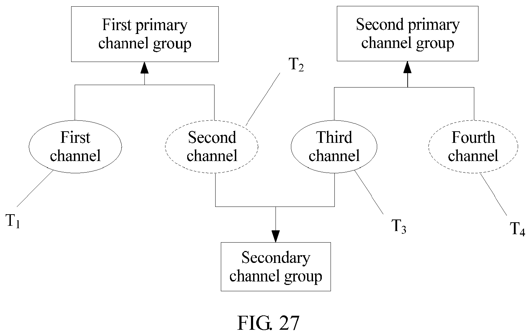

Referring to FIG. 26 and FIG. 27, the multi-channel calibration method provided by this embodiment is implemented by using the multi-channel calibration apparatus shown in FIG. 1, and the method specifically includes the following steps.

The multi-channel calibration apparatus groups four channels into two primary channel groups, two channels per primary channel group, that is, the first channel T₁ and the second channel T₂ form a first primary channel group, and the third channel T₃ and the fourth channel T₄ form a second primary channel group; and the multi-channel calibration apparatus obtains an amplitude calibration coefficient u₁ of the first primary channel group and an amplitude calibration coefficient u₂ of the second primary channel group according to S101 and S102 in the multi-channel calibration method provided by Embodiment 2, where the first channel T₁ is a reference channel in the first primary channel group, the second channel T₂ is a comparative channel in the first primary channel group, the third channel T₃ is a reference channel in the second primary channel group, and the fourth channel T₄ is a comparative channel in the second primary channel group.

The second channel T₂ in the first primary channel group and the third channel T₃ in the second primary channel group are selected to form a secondary channel group, and an amplitude calibration coefficient w of the secondary channel group is obtained according to S101 and S102 in the multi-channel calibration method provided by Embodiment 2, where the second channel T₂ is a reference channel in the secondary channel group, and the third channel is a comparative channel in the secondary channel group.

The first channel T₁ in the first primary channel group is used as a base channel to obtain a target amplitude calibration coefficient u₁ of the second channel T₂, a target amplitude calibration coefficient w×u₁ of the third channel T₃, and a target amplitude calibration coefficient w×u₂×u₁ of the fourth channel T₄. Because the first channel T₁ is used as the base channel, the first channel T₁ may be considered as uncalibrated.

Amplitudes of corresponding channels are adjusted based on the target amplitude calibration coefficient of the second channel T₂, the target amplitude calibration coefficient of the third channel T₃, and the target amplitude calibration coefficient of the fourth channel T₄, so that an amplitude of the second channel T₂, an amplitude of the third channel T₃, and an amplitude of the fourth channel T₄ are equal to an amplitude of the first channel T₁ used as the base channel.

For example, before a multi-channel calibration is performed, the amplitude of the first channel T₁ is 1 dB, the amplitude of the second channel T₂ is 0.5 dB, the amplitude of the third channel T₃ is 0.25 dB, and the amplitude of the fourth channel T₄ is 0.25 dB.

According to S101 and S102 in the multi-channel calibration method provided by Embodiment 2, it is learned that the amplitude calibration coefficient u₁ of the first primary channel group is 2, and that the amplitude calibration coefficient u₂ of the second primary channel group is 1.

According to S101 and S102 in the multi-channel calibration method provided by Embodiment 2, it is learned that the amplitude calibration coefficient w of the secondary channel group is 2.

Therefore, the target amplitude calibration coefficient u₁ of the second channel T₂ is 2, the target amplitude calibration coefficient u₁×w of the third channel T₃ is 2 × 2 = 4, and the target amplitude calibration coefficient w×u₂×u₁ of the fourth channel T₄ is 2 × 1 × 2 = 4.

It should be noted that, an example is used to explain how the multi-channel calibration apparatus provided in FIG. 1 implements the multi-channel calibration method provided by this embodiment. However, a quantity of channels to which the multi-channel calibration apparatus provided by this embodiment is applicable cannot be limited, and more other channels can also be calibrated.

In addition, a method used in a phase calibration is relatively similar to the multi-channel amplitude calibration method provided by this embodiment, and a difference lies in that the obtaining a phase calibration coefficient in the method refers to S201 and S202 in the multi-channel phase calibration method provided by Embodiment 2, or S201' and S202' in the multi-channel phase calibration method provided by Embodiment 4, and the obtaining a target phase calibration coefficient based on a previous phase calibration coefficient. However, persons skilled in the art can know this based on an actual situation. Details are not described again herein.

### Embodiment 6

This embodiment provides a transceiver system, including the multi-channel calibration apparatus provided by Embodiment 1 and/or the multi-channel calibration apparatus provided by Embodiment 3.

### Example 7

This application provides a base station, including the transceiver system provided by Embodiment 6.

## Claims

1. A multi-channel calibration apparatus, applied to N transmit channels, and comprising a calibration control unit (1) and a calibration feed unit, wherein the calibration feed unit comprises M detectors (A1, A2, A3) two input ports of each detector are coupled to two channels, at least one input port of each detector and an input port of another detector are jointly coupled to one channel, the calibration control unit is connected to each of the M detectors, and N is an integer greater than 2;
an m^{th} detector is configured to detect a calibration measurement signal on an r^{th} channel and a calibration measurement signal on a k^{th} channel, to obtain level signals representing amplitude information and/or phase information of the r^{th} channel and the k^{th} channel, wherein 1 ≤ m ≤ M, 1 ≤ r ≤ N, 1 ≤ k ≤ N, r ≠ k, and M is an integer greater than or equal to 1; and
the calibration control unit is configured to obtain an amplitude calibration coefficient based on the level signals representing the amplitude information of the r^{th} channel and the k^{th} channel and obtained by the m^{th} detector, wherein the amplitude calibration coefficient is used to calibrate amplitudes of two channels coupled to the m^{th} detector; and/or obtain a phase calibration coefficient based on the level signals representing the phase information of the r^{th} channel and the k^{th} channel and obtained by the m^{th} detector, wherein the phase calibration coefficient is used to calibrate phases of two channels coupled to the m^{th} detector
wherein the multi-channel calibration apparatus further comprises N execution units that are correspondingly connected to the N transmit channels in a one-to-one manner, wherein each execution unit is further connected to the calibration control unit, and each execution unit is configured to adjust, based on an amplitude calibration coefficient, an amplitude of a channel connected to the execution unit, so that the amplitude of the r^{th} channel is equal to the amplitude of the k^{th} channel and/or adjust, based on a phase calibration coefficient, a phase of a channel connected to the execution unit so that the phase deviation of the r^{th} channel and the k^{th} channel comply with a preset phase deviation;
wherein M = N; and
when 1 ≤ m ≤ N - 2, the channels coupled to the m^{th} detector are an m^{th} channel and an (m+1)^{th} channel, and channels coupled to an (m+1)^{th} detector are the (m+1)^{th} 44 channel and an (m+2)^{th} channel; or
when m = N, the channels coupled to the m^{th} detector are an N^{th} channel and a t^{th} channel, wherein 1 ≤ t ≤ N - 2.

2. The multi-channel calibration apparatus according to claim 1, wherein the calibration control unit comprises a control module and a data processing module, wherein the data processing module is connected to an output end of each of the M detector;
the control module is configured to control the data processing module to read the level signals representing the amplitude information of the r^{th} channel and the k^{th} channel and transmitted by the m^{th} detector, and/or control the data processing module to read the level signals representing the phase information of the r^{th} channel and the k^{th} channel and transmitted by the m^{th} detector;
the data processing module is configured to obtain the amplitude calibration coefficient based on the level signals representing the amplitude information of the r^{th} channel and the k^{th} channel, and/or obtain the phase calibration coefficient based on the level signals representing the phase information of the r^{th} channel and the k^{th} channel;
the data processing module is further connected to the execution unit; and
the control module is further configured to control the data processing module to transmit the amplitude calibration coefficient to the execution unit, so that the execution unit adjusts, based on the amplitude calibration coefficient, the amplitudes of the channels coupled to the m^{th} detector, and/or control the data processing module to transmit the phase calibration coefficient to the execution unit, so that the execution unit adjusts, based on the phase calibration coefficient, the phases of the channels coupled to the m^{th} detector.

3. A multi-channel calibration method for use in a multi-channel calibration apparatus applied to N transmit channels, comprising a calibration control unit and a calibration feed unit, wherein the calibration feed unit comprises M detectors, two input ports of each detector are coupled to two channels, at least one input port of each detector and an input port of another detector are jointly coupled to one channel, the calibration control unit is connected to each of the M detectors, and N is an integer greater than 2, wherein M = N; and when 1 ≤ m ≤ N - 2, the channels coupled to the m^{th} detector are an m^{th} channel and an (m+1)^{th} channel, and channels coupled to an (m+1)^{th} detector are the (m+1)^{th} channel and an (m+2)^{th} channel; or when m = N, the channels coupled to the m^{th} detector are an N^{th} channel and a t^{th} channel, wherein 1 ≤ t ≤ N - 2;
the method is applied to transmit channels, and comprising M' amplitude calibrations, wherein two channels are calibrated in each amplitude calibration, channels calibrated in two consecutive amplitude calibrations comprise a same channel, channels calibrated in an m'^{th} amplitude calibration are an r^{th} channel and a k^{th} channel, r ≠ k, r and k are both integers greater than or equal to 1 and less than or equal to N, N is a channel quantity, N is an integer greater than 2, M' is an integer greater than or equal to 1, and m' is an integer greater than or equal to 1 and less than or equal to M'; and
a calibration method in the m'^{th} amplitude calibration comprises the following steps:
detecting (S101), by the multi-channel calibration apparatus, a calibration measurement signal on the r^{th} channel and a calibration measurement signal on the k^{th} channel, to obtain level signals representing amplitude information of the r^{th} channel and the k^{th} channel;
obtaining (S102) an amplitude calibration coefficient based on the level signals representing the amplitude information of the r^{th} channel and the k^{th} channel; and
when m' = 1, in the m'^{th} amplitude calibration, adjusting (SI03), by the multi-channel calibration apparatus, an amplitude of the r^{th} channel and/or an amplitude of the k^{th} channel based on the amplitude calibration coefficient, so that the amplitude of the r^{th} channel is equal to the amplitude of the k^{th} channel; or
when m' ≥ 2, in the m'^{th} amplitude calibration, adjusting (SI03), by the multi-channel calibration apparatus, an amplitude of the r^{th} channel based on the amplitude calibration coefficient, so that the amplitude of the r^{th} channel is equal to an amplitude of the k^{th} channel, wherein the k^{th} channel participates in an (m'-1)^{th} amplitude calibration;
or
comprising M" phase calibrations, wherein two channels are calibrated in each phase calibration, channels calibrated in two consecutive phase calibrations comprise a same channel, channels calibrated in an m"^{th} phase calibration are an r^{th} channel and a k^{th} channel, r ≠ k, r and k are both integers greater than or equal to 1 and less than or equal to N, N is a channel quantity, N is an integer greater than 2, M" is an integer greater than or equal to 1, and m" is an integer greater than or equal to 1 and less than or equal to M"; and
a calibration method in the m"^{th} phase calibration comprises the following steps:
detecting (S201), by the multi-channel calibration apparatus, a calibration measurement signal on the r^{th} channel and a calibration measurement signal on the k^{th} channel, to obtain level signals representing phase information of the r^{th} channel and the k^{th} channel;
obtaining (S202) a phase calibration coefficient based on the level signals representing the phase information of the r^{th} channel and the k^{th} channel; and
when m" = 1, in the m"^{th} phase calibration, adjusting (S203), by the multi-channel calibration apparatus, a phase of the r^{th} channel and/or a phase of the k^{th} channel based on the phase calibration coefficient, so that a phase deviation between the r^{th} channel and the k^{th} channel complies with a preset phase deviation; or
when m" ≥ 2, in the m"^{th} phase calibration, adjusting (S203), by the multi-channel calibration apparatus, a phase of the r^{th} channel based on the phase calibration coefficient, so that a phase deviation between the r^{th} channel and the k^{th} channel complies with a preset phase deviation, wherein the k^{th} channel participates in an (m"-1)^{th} phase calibration.

4. A multi-channel calibration apparatus, applied to N receive channels, and comprising a calibration feed unit and a calibration control unit (1), wherein the calibration feed unit comprises Q reference source units, two output ends of each reference source unit are coupled to two channels, at least one output end of each reference source unit and an output end of another reference source unit are jointly coupled to one channel, and N is an integer greater than 2;
an m^{th} reference source unit is configured to transmit calibration measurement signals to an r^{th} channel and a k^{th} channel, wherein the calibration measurement signals are used to measure amplitudes and/or phases of the r^{th} channel and the k^{th} channel, 1 ≤ m ≤ Q, 1 ≤ r ≤ N, 1 ≤ k ≤ N, r ≠ k, and Q is an integer greater than or equal to 1; and
the calibration control unit is configured to obtain an amplitude calibration coefficient based on the amplitudes of the r^{th} channel and the k^{th} channel, wherein the amplitude calibration coefficient is used to calibrate amplitudes of two channels coupled to the m^{th} reference source unit; and/or obtain a phase calibration coefficient based on the phases of the r^{th} channel and the k^{th} channel, wherein the phase calibration coefficient is used to calibrate phases of two channels coupled to the m^{th} reference source unit;
wherein the calibration apparatus further comprises N execution units that are correspondingly connected to the N receive channels in a one-to-one manner, wherein each execution unit is further connected to the calibration control unit, and each execution unit is configured to adjust, based on an amplitude calibration coefficient, an amplitude of a channel correspondingly connected to the execution unit so that the amplitude of the r^{th} channel is equal to the amplitude of the k^{th} channel, and/or adjust, based on a phase calibration coefficient, a phase of a channel correspondingly connected to the execution unit so that the phase deviation of the r^{th} channel and the k^{th} channel comply with a preset phase deviation;
wherein Q = N; and
when 1 ≤ m ≤ N - 2, the channels coupled to the m^{th} reference source unit are an m^{th} channel and an (m+1)^{th} channel, and channels coupled to an (m+1) reference source unit are the (m+1)^{th} channel and an (m+2)^{th} channel; or
when m = N, the channels coupled to the m^{th} reference source unit are an N^{th} channel and a t^{th} channel, wherein 1 ≤ t ≤ N - 2.

5. The multi-channel calibration apparatus according to claim 4, wherein the calibration control unit comprises a control module and a data processing module, wherein output ends of the control module are connected to the Q reference source units respectively, and the data processing module is connected to each of the N receive channels;
the control module is configured to transmit a control signal to the m^{th} reference source unit, and control the data processing module to obtain the amplitudes of the r^{th} channel and the k^{th} channel and/or to obtain the phases of the r^{th} channel and the k^{th} channel;
the data processing module is configured to obtain the amplitude calibration coefficient based on the amplitudes of the r^{th} channel and the k^{th} channel, and/or obtain the phase calibration coefficient based on a preset phase deviation and a phase deviation existing between the phases of the r^{th} channel and the k^{th} channel;
the data processing module is further connected to the execution unit; and
the control module is further configured to control the data processing module to transmit the amplitude calibration coefficient to the execution unit, so that the execution unit adjusts, based on the amplitude calibration coefficient, the amplitudes of the two channels coupled to the m^{th} reference source unit, and/or control the data processing module to transmit the phase calibration coefficient to the execution unit, so that the execution unit adjusts, based on the phase calibration coefficient, the phases of the two channels coupled to the m^{th} reference source unit.

6. A multi-channel calibration method for use in a multi-channel calibration apparatus applied to N receive channels comprising a calibration feed unit and a calibration control unit, wherein the calibration feed unit comprises Q reference source units, two output ends of each reference source unit are coupled to two channels, at least one output end of each reference source unit and an output end of another reference source unit are jointly coupled to one channel, and N is an integer greater than 2, wherein Q = N; and when 1 ≤ m ≤ N - 2, the channels coupled to the m^{th} reference source unit are an m^{th} channel and an (m+1)^{th} channel, and channels coupled to an (m+1) reference source unit are the (m+1)^{th} channel and an (m+2)^{th} channel; or when m = N, the channels coupled to the m^{th} reference source unit are an N^{th} channel and a t^{th} channel, wherein 1 ≤ t ≤ N - 2;
wherein the method is applied to receive channels, and comprising M' amplitude calibrations, wherein two channels are calibrated in each amplitude calibration, channels calibrated in two consecutive amplitude calibrations comprise a same channel, channels calibrated in an m'^{th} amplitude calibration are an r^{th} channel and a k^{th} channel, r ≠ k, r and k are both integers greater than or equal to 1 and less than or equal to N, N is a channel quantity, N is an integer greater than 2, M' is an integer greater than or equal to 1, and m' is an integer greater than or equal to 1 and less than or equal to M'; and
a calibration method in the m'^{th} amplitude calibration comprises the following steps:
transmitting (S101'), by a multi-channel calibration apparatus, calibration measurement signals to the r^{th} channel and the k^{th} channel, wherein the calibration measurement signals are used to measure amplitudes of the r^{th} channel and the k^{th} channel;
obtaining (S102') an amplitude calibration coefficient based on the amplitudes of the r^{th} channel and the k^{th} channel; and
when m' = 1, in the m'^{th} amplitude calibration, adjusting, by the multi-channel calibration apparatus, an amplitude of the r^{th} channel and/or an amplitude of the k^{th} channel based on the amplitude calibration coefficient, so that the amplitude of the r^{th} channel is equal to the amplitude of the k^{th} channel; or
when m' ≥ 2, in the m'^{th} amplitude calibration, adjusting, by the multi-channel calibration apparatus, an amplitude of the r^{th} channel based on the amplitude calibration coefficient, so that the amplitude of the r^{th} channel is equal to an amplitude of the k^{th} channel, wherein the k^{th} channel participates in an (m'-1)^{th} amplitude calibration;
or
wherein the method is applied to receive channels, and comprising M" phase calibrations, wherein two channels are calibrated in each phase calibration, channels calibrated in two consecutive phase calibrations comprise a same channel, channels calibrated in an m"^{th} phase calibration are an r^{th} channel and a k^{th} channel, r ≠ k, r and k are both integers greater than or equal to 1 and less than or equal to N, N is a channel quantity, N is an integer greater than 2, M" is an integer greater than or equal to 1, and m" is an integer greater than or equal to 1 and less than or equal to M"; and
a calibration method in the m"^{th} phase calibration comprises the following steps:
transmitting, by a multi-channel calibration apparatus, calibration measurement signals to the r^{th} channel and the k^{th} channel, wherein the calibration measurement signals are used to measure phases of the r^{th} channel and the k^{th} channel;
obtaining a phase calibration coefficient based on the phases of the r^{th} channel and the k^{th} channel; and
when m" = 1, in the m"^{th} phase calibration, adjusting, by the multi-channel calibration apparatus, a phase of the r^{th} channel and/or a phase of the k^{th} channel based on the phase calibration coefficient, so that a phase deviation between the r^{th} channel and the k^{th} channel complies with a preset phase deviation; or
when m" ≥ 2, in the m"^{th} phase calibration, adjusting, by the multi-channel calibration apparatus, a phase of the r^{th} channel based on the phase calibration coefficient, so that a phase deviation between the r^{th} channel and the k^{th} channel complies with a preset phase deviation, wherein the k^{th} channel participates in an (m"-1)^{th} phase calibration.

7. A transceiver system, comprising the multi-channel calibration apparatus according to any one of claims 1 or 2 and/or the multi-channel calibration apparatus according to any one of claims 4 or 5.

## Patentansprüche

1. Mehrkanalkalibrierungseinrichtung, die auf N Übertragungskanäle angewendet wird und eine Kalibrierungssteuereinheit (1) und eine Kalibrierungsspeiseeinheit umfasst, wobei die Kalibrierungsspeiseeinheit M Detektoren (A1, A2, A3) umfasst, zwei Eingangsanschlüsse jedes Detektors mit zwei Kanälen gekoppelt sind, mindestens ein Eingangsanschluss jedes Detektors und ein Eingangsanschluss eines anderen Detektors gemeinsam mit einem Kanal gekoppelt sind, die Kalibrierungssteuereinheit mit jedem der M Detektoren verbunden ist und N eine Ganzzahl größer als 2 ist;
wobei ein m-ter Detektor ausgelegt ist zum Detektieren eines Kalibrierungsmesssignals auf einem r-ten Kanal und eines Kalibrierungsmesssignals auf einem k-ten Kanal, um Pegelsignale zu erhalten, die Amplitudeninformationen und/oder Phaseninformationen des r-ten Kanals und des k-ten Kanals repräsentieren, wobei 1 ≤ m ≤ M, 1 ≤ r ≤ N, 1 ≤ k ≤ N, r ≠ k gelten und M eine Ganzzahl größer oder gleich 1 ist; und
wobei die Kalibrierungssteuereinheit ausgelegt ist zum Erhalten eines Amplitudenkalibrierungskoeffizienten basierend auf den Pegelsignalen, die die Amplitudeninformationen des r-ten Kanals und des k-ten Kanals repräsentieren und durch den m-ten Detektor erhalten wurden, wobei der Amplitudenkalibrierungskoeffizient verwendet wird, um Amplituden von zwei mit dem m-ten Detektor gekoppelten Kanälen zu kalibrieren; und/oder zum Erhalten eines Phasenkalibrierungskoeffizienten basierend auf den Pegelsignalen, die die Phaseninformationen des r-ten Kanals und des k-ten Kanals repräsentieren und durch den m-ten Detektor erhalten wurden, wobei der Phasenkalibrierungskoeffizient verwendet wird, um Phasen von zwei mit dem m-ten Detektor gekoppelten Kanälen zu kalibrieren,
wobei die Mehrkanalkalibrierungseinrichtung ferner N Ausführungseinheiten umfasst, die auf eine Eins-zu-Eins-Weise entsprechend mit den N Übertragungskanälen verbunden sind, wobei jede Ausführungseinheit ferner mit der Kalibrierungssteuereinheit verbunden ist und jede Ausführungseinheit ausgelegt ist zum Anpassen, basierend auf einem Amplitudenkalibrierungskoeffizienten, einer Amplitude eines mit der Ausführungseinheit verbundenen Kanals, sodass die Amplitude des r-ten Kanals gleich der Amplitude des k-ten Kanals ist, und/oder zum Anpassen, basierend auf einem Phasenkalibrierungskoeffizienten, einer Phase eines mit der Ausführungseinheit verbundenen Kanals, sodass die Phasenabweichung des r-ten und des k-ten Kanals eine vorgegebene Phasenabweichung einhalten;
wobei M = N gilt; und
wenn 1 ≤ m ≤ N - 2 gilt, die mit dem m-ten Detektor gekoppelten Kanäle ein m-ter Kanal und ein (m+1)-ter Kanal sind und mit einem (m+1)-ten Detektor gekoppelte Kanäle der (m+1)-te Kanal und ein (m+2)-ter Kanal sind; oder
wenn m = N gilt, die mit dem m-ten Detektor gekoppelten Kanäle ein N-ter Kanal und ein t-ter Kanal sind, wobei 1 ≤ t ≤ N - 2 gilt.

2. Mehrkanalkalibrierungseinrichtung nach Anspruch 1, wobei die Kalibrierungssteuereinheit ein Steuermodul und ein Datenverarbeitungsmodul umfasst, wobei das Datenverarbeitungsmodul mit einem Ausgangsende jedes der M Detektoren verbunden ist;
wobei das Steuermodul ausgelegt ist zum Steuern des Datenverarbeitungsmoduls zum Lesen der Pegelsignale, die die Amplitudeninformationen des r-ten Kanals und des k-ten Kanals repräsentieren und durch den m-ten Detektor übertragen wurden, und/oder zum Steuern des Datenverarbeitungsmoduls zum Lesen der Pegelsignale, die die Phaseninformationen des r-ten Kanals und des k-ten Kanals repräsentieren und durch den m-ten Detektor übertragen wurden;
wobei das Datenverarbeitungsmodul ausgelegt ist zum Erhalten des Amplitudenkalibrierungskoeffizienten basierend auf den Pegelsignalen, die die Amplitudeninformationen des r-ten Kanals und des k-ten Kanals repräsentieren und/oder zum Erhalten des Phasenkalibrierungskoeffizienten basierend auf den Pegelsignalen, die die Phaseninformationen des r-ten Kanals und des k-ten Kanals repräsentieren;
wobei das Datenverarbeitungsmodul ferner mit der Ausführungseinheit verbunden ist; und
wobei das Steuermodul ferner ausgelegt ist zum Steuern des Datenverarbeitungsmoduls zum Übertragen des Amplitudenkalibrierungskoeffizienten an die Ausführungseinheit, sodass die Ausführungseinheit, basierend auf dem Amplitudenkalibrierungskoeffizienten, die Amplituden der mit dem m-ten Detektor gekoppelten Kanäle anpasst, und/oder zum Steuern des Datenverarbeitungsmoduls zum Übertragen des Phasenkalibrierungskoeffizienten an die Ausführungseinheit, sodass die Ausführungseinheit, basierend auf dem Phasenkalibrierungskoeffizienten, die Phasen der mit dem m-ten Detektor gekoppelten Kanäle anpasst.

3. Mehrkanalkalibrierungsverfahren zur Verwendung in einer Mehrkanalkalibrierungseinrichtung, die auf N Übertragungskanäle angewendet wird, umfassend eine Kalibrierungssteuereinheit und eine Kalibrierungsspeiseeinheit, wobei die Kalibrierungsspeiseeinheit M Detektoren umfasst, zwei Eingangsanschlüsse jedes Detektors mit zwei Kanälen gekoppelt sind, mindestens ein Eingangsanschluss jedes Detektors und ein Eingangsanschluss eines anderen Detektors gemeinsam mit einem Kanal gekoppelt sind, die Kalibrierungssteuereinheit mit jedem der M Detektoren verbunden ist und N eine Ganzzahl größer als 2 ist, wobei M = N gilt; und, wenn 1 ≤ m ≤ N - 2 gilt, die mit dem m-ten Detektor gekoppelten Kanäle ein m-ter Kanal und ein (m+1)-ter Kanal sind und mit einem (m+1)-ten Detektor gekoppelte Kanäle der (m+1)-te Kanal und ein (m+2)-ter Kanal sind; oder, wenn m = N gilt, die mit dem m-ten Detektor gekoppelten Kanäle ein N-ter Kanal und ein t-ter Kanal sind, wobei 1 ≤ t ≤ N - 2 gilt;
wobei das Verfahren auf Übertragungskanäle angewendet wird und M' Amplitudenkalibrierungen umfasst, wobei bei jeder Amplitudenkalibrierung zwei Kanäle kalibriert werden, Kanäle, die bei zwei aufeinanderfolgenden Amplitudenkalibrierungen kalibriert werden, einen gleichen Kanal umfassen, Kanäle, die bei einer m'-ten Amplitudenkalibrierung kalibriert werden, ein r-ter Kanal und ein k-ter Kanal sind, r ≠ k gilt, sowohl r als auch k Ganzzahlen größer oder gleich 1 und kleiner oder gleich N sind, N eine Kanalmenge ist, N eine Ganzzahl größer als 2 ist, M' eine Ganzzahl größer oder gleich 1 ist und m' eine Ganzzahl größer oder gleich 1 und kleiner oder gleich M' ist; und
wobei ein Kalibrierungsverfahren bei der m'-ten Amplitudenkalibrierung die folgenden Schritte umfasst:
Detektieren (S101), durch die Mehrkanalkalibrierungseinrichtung, eines Kalibrierungsmesssignals auf dem r-ten Kanal und eines Kalibrierungsmesssignals auf dem k-ten Kanal, um Pegelsignale zu erhalten, die Amplitudeninformationen des r-ten Kanals und des k-ten Kanals repräsentieren;
Erhalten (S102) eines Amplitudenkalibrierungskoeffizienten basierend auf den Pegelsignalen, die die Amplitudeninformationen des r-ten Kanals und des k-ten Kanals repräsentieren; und
wenn m' = 1 gilt, bei der m'-ten Amplitudenkalibrierung, Anpassen (S103), durch die Mehrkanalkalibrierungseinrichtung, einer Amplitude des r-ten Kanals und/oder einer Amplitude des k-ten Kanals basierend auf dem Amplitudenkalibrierungskoeffizienten, sodass die Amplitude des r-ten Kanals gleich der Amplitude des k-ten Kanals ist; oder
wenn m' ≥ 2 gilt, bei der m'-ten Amplitudenkalibrierung, Anpassen (S 103), durch die Mehrkanalkalibrierungseinrichtung, einer Amplitude des r-ten Kanals basierend auf dem Amplitudenkalibrierungskoeffizienten, sodass die Amplitude des r-ten Kanals gleich einer Amplitude des k-ten Kanals ist, wobei der k-te Kanal an einer (m'-1)-ten Amplitudenkalibrierung teilnimmt;
oder
M" Phasenkalibrierungen umfasst, wobei bei jeder Phasenkalibrierung zwei Kanäle kalibriert werden, Kanäle, die bei zwei aufeinanderfolgenden Phasenkalibrierungen kalibriert werden, einen gleichen Kanal umfassen, Kanäle, die bei einer m"-ten Phasenkalibrierung kalibriert werden, ein r-ter Kanal und ein k-ter Kanal sind, r ≠ k gilt, sowohl r als auch k Ganzzahlen größer oder gleich 1 und kleiner oder gleich N sind, N eine Kanalmenge ist, N eine Ganzzahl größer als 2 ist, M" eine Ganzzahl größer oder gleich 1 ist und m" eine Ganzzahl größer oder gleich 1 und kleiner oder gleich M" ist; und
wobei ein Kalibrierungsverfahren bei der m"-ten Phasenkalibrierung die folgenden Schritte umfasst:
Detektieren (S201), durch die Mehrkanalkalibrierungseinrichtung, eines Kalibrierungsmesssignals auf dem r-ten Kanal und eines Kalibrierungsmesssignals auf dem k-ten Kanal, um Pegelsignale zu erhalten, die Phaseninformationen des r-ten Kanals und des k-ten Kanals repräsentieren;
Erhalten (S202) eines Phasenkalibrierungskoeffizienten basierend auf den Pegelsignalen, die die Phaseninformationen des r-ten Kanals und des k-ten Kanals repräsentieren; und
wenn m" = 1 gilt, bei der m"-ten Phasenkalibrierung, Anpassen (S203), durch die Mehrkanalkalibrierungseinrichtung, einer Phase des r-ten Kanals und/oder einer Phase des k-ten Kanals basierend auf dem Phasenkalibrierungskoeffizienten, sodass die Phasenabweichung zwischen dem r-ten und dem k-ten Kanal eine vorgegebene Phasenabweichung einhält; oder
wenn m" ≥ 2 gilt, bei der m"-ten Phasenkalibrierung, Anpassen (S203), durch die Mehrkanalkalibrierungseinrichtung, einer Phase des r-ten Kanals basierend auf dem Phasenkalibrierungskoeffizienten, sodass eine Phasenabweichung zwischen dem r-ten Kanal und dem k-ten Kanal eine vorgegebene Phasenabweichung einhält, wobei der k-te Kanal an einer (m"-1)-ten Phasenkalibrierung teilnimmt.

4. Mehrkanalkalibrierungseinrichtung, die auf N Empfangskanäle angewendet wird und eine Kalibrierungsspeiseeinheit und eine Kalibrierungssteuereinheit (1) umfasst, wobei die Kalibrierungsspeiseeinheit Q Referenzquelleneinheiten umfasst, zwei Ausgangsenden jeder Referenzquelleneinheit mit zwei Kanälen gekoppelt sind, mindestens ein Ausgangsende jeder Referenzquelleneinheit und ein Ausgangsende einer anderen Referenzquelleneinheit gemeinsam mit einem Kanal gekoppelt sind und N eine Ganzzahl größer als 2 ist;
wobei eine m-te Referenzquelleneinheit ausgelegt ist zum Übertragen von Kalibrierungsmesssignalen an einen r-ten Kanal und einen k-ten Kanal, wobei die Kalibrierungsmesssignale verwendet werden, um Amplituden und/oder Phasen des r-ten Kanals und des k-ten Kanals zu messen, 1 ≤ m ≤ Q, 1 ≤ r ≤ N, 1 ≤ k ≤ N, r ≠ k gelten und Q eine Ganzzahl größer oder gleich 1 ist; und
wobei die Kalibrierungssteuereinheit ausgelegt ist zum Erhalten eines Amplitudenkalibrierungskoeffizienten basierend auf den Amplituden des r-ten Kanals und des k-ten Kanals, wobei der Amplitudenkalibrierungskoeffizient verwendet wird, um Amplituden von zwei mit der m-ten Referenzquelleneinheit gekoppelten Kanälen zu kalibrieren; und/oder zum Erhalten eines Phasenkalibrierungskoeffizienten basierend auf den Phasen des r-ten Kanals und des k-ten Kanals, wobei der Phasenkalibrierungskoeffizient verwendet wird, um Phasen von zwei mit der m-ten Referenzquelleneinheit gekoppelten Kanälen zu kalibrieren;
wobei die Kalibrierungseinrichtung ferner N Ausführungseinheiten umfasst, die auf eine Eins-zu-Eins-Weise entsprechend mit den N Empfangskanälen verbunden sind, wobei jede Ausführungseinheit ferner mit der Kalibrierungssteuereinheit verbunden ist und jede Ausführungseinheit ausgelegt ist zum Anpassen, basierend auf einem Amplitudenkalibrierungskoeffizienten, einer Amplitude eines entsprechend mit der Ausführungseinheit verbundenen Kanals, sodass die Amplitude des r-ten Kanals gleich der Amplitude des k-ten Kanals ist, und/oder zum Anpassen, basierend auf einem Phasenkalibrierungskoeffizienten, einer Phase eines entsprechend mit der Ausführungseinheit verbundenen Kanals, sodass die Phasenabweichung des r-ten und des k-ten Kanals eine vorgegebene Phasenabweichung einhalten;
wobei Q = N gilt; und
wenn 1 ≤ m ≤ N - 2 gilt, die mit der m-ten Referenzquelleneinheit gekoppelten Kanäle ein m-ter Kanal und ein (m+1)-ter Kanal sind und mit einer (m+1)-ten Referenzquelleneinheit gekoppelte Kanäle der (m+1)-te Kanal und ein (m+2)-ter Kanal sind; oder
wenn m = N gilt, die mit der m-ten Referenzquelleneinheit gekoppelten Kanäle ein N-ter Kanal und ein t-ter Kanal sind, wobei 1 ≤ t ≤ N - 2 gilt.

5. Mehrkanalkalibrierungseinrichtung nach Anspruch 4 wobei die Kalibrierungssteuereinheit ein Steuermodul und ein Datenverarbeitungsmodul umfasst, wobei Ausgangsenden des Steuermoduls jeweils mit den Q Referenzquelleneinheit verbunden sind und das Datenverarbeitungsmodul mit jedem der N Empfangskanäle verbunden ist;
wobei das Steuermodul ausgelegt ist zum Übertragen eines Steuersignals an die m-te Referenzquelleneinheit und zum Steuern des Datenverarbeitungsmoduls zum Erhalten der Amplituden des r-ten Kanals und des k-ten Kanals und/oder zum Erhalten der Phasen des r-ten Kanals und des k-ten Kanals;
wobei das Datenverarbeitungsmodul ausgelegt ist zum Erhalten des Amplitudenkalibrierungskoeffizienten basierend auf den Amplituden des r-ten Kanals und des k-ten Kanals und/oder zum Erhalten des Phasenkalibrierungskoeffizienten basierend auf einer vorgegebenen Phasenabweichung und einer zwischen den Phasen des r-ten Kanals und des k-ten bestehenden Phasenabweichung;
wobei das Datenverarbeitungsmodul ferner mit der Ausführungseinheit verbunden ist; und
wobei das Steuermodul ferner ausgelegt ist zum Steuern des Datenverarbeitungsmoduls zum Übertragen des Amplitudenkalibrierungskoeffizienten an die Ausführungseinheit, sodass die Ausführungseinheit, basierend auf dem Amplitudenkalibrierungskoeffizienten, die Amplituden der zwei mit der m-ten Referenzquelleneinheit gekoppelten Kanäle anpasst, und/oder zum Steuern des Datenverarbeitungsmoduls zum Übertragen des Phasenkalibrierungskoeffizienten an die Ausführungseinheit, sodass die Ausführungseinheit, basierend auf dem Phasenkalibrierungskoeffizienten, die Phasen der zwei mit der m-ten Referenzquelleneinheit gekoppelten Kanäle anpasst.

6. Mehrkanalkalibrierungsverfahren zur Verwendung in einer Mehrkanalkalibrierungseinrichtung, die auf N Empfangskanäle angewendet wird, umfassend eine Kalibrierungsspeiseeinheit und eine Kalibrierungssteuereinheit, wobei die Kalibrierungsspeiseeinheit Q Referenzquelleneinheiten umfasst, zwei Ausgangsenden jeder Referenzquelleneinheit mit zwei Kanälen gekoppelt sind, mindestens ein Ausgangsende jeder Referenzquelleneinheit und ein Ausgangsende einer anderen Referenzquelleneinheiten gemeinsam mit einem Kanal gekoppelt sind und N eine Ganzzahl größer als 2 ist, wobei Q = N gilt; und, wenn 1 ≤ m ≤ N - 2 gilt, die mit der m-ten Referenzquelleneinheit gekoppelten Kanäle ein m-ter Kanal und ein (m+1)-ter Kanal sind und mit einer (m+1)-ten Referenzquelleneinheit gekoppelte Kanäle der (m+1)-te Kanal und ein (m+2)-ter Kanal sind; oder wenn m = N gilt, die mit der m-ten Referenzquelleneinheit gekoppelten Kanäle ein N-ter Kanal und ein t-ter Kanal sind, wobei 1 ≤ t ≤ N - 2 gilt;
wobei das Verfahren auf Empfangskanäle angewendet wird und M' Amplitudenkalibrierungen umfasst, wobei bei jeder Amplitudenkalibrierung zwei Kanäle kalibriert werden, Kanäle, die bei zwei aufeinanderfolgenden Amplitudenkalibrierungen kalibriert werden, einen gleichen Kanal umfassen, Kanäle, die bei einer m'-ten Amplitudenkalibrierung kalibriert werden, ein r-ter Kanal und ein k-ter Kanal sind, r ≠ k gilt, sowohl r als auch k Ganzzahlen größer oder gleich 1 und kleiner oder gleich N sind, N eine Kanalmenge ist, N eine Ganzzahl größer als 2 ist, M' eine Ganzzahl größer oder gleich 1 ist und m' eine Ganzzahl größer oder gleich 1 und kleiner oder gleich M' ist; und
wobei ein Kalibrierungsverfahren bei der m'-ten Amplitudenkalibrierung die folgenden Schritte umfasst:
Übertragen (S101'), durch eine Mehrkanalkalibrierungseinrichtung, von Kalibrierungsmesssignalen an den r-ten Kanal und den k-ten Kanal, wobei die Kalibrierungsmesssignale verwendet werden, um Amplituden des r-ten Kanals und des k-ten Kanals zu messen;
Erhalten (S 102') eines Amplitudenkalibrierungskoeffizienten basierend auf den Amplituden des r-ten Kanals und des k-ten Kanals; und
wenn m' = 1 gilt, bei der m'-ten Amplitudenkalibrierung, Anpassen, durch die Mehrkanalkalibrierungseinrichtung, einer Amplitude des r-ten Kanals und/oder einer Amplitude des k-ten Kanals basierend auf dem Amplitudenkalibrierungskoeffizienten, sodass die Amplitude des r-ten Kanals gleich der Amplitude des k-ten Kanals ist; oder
wenn m' ≥ 2 gilt, bei der m'-ten Amplitudenkalibrierung, Anpassen, durch die Mehrkanalkalibrierungseinrichtung, einer Amplitude des r-ten Kanals basierend auf dem Amplitudenkalibrierungskoeffizienten, sodass die Amplitude des r-ten Kanals gleich einer Amplitude des k-ten Kanals ist, wobei der k-te Kanal an einer (m'-1)-ten Amplitudenkalibrierung teilnimmt;
oder
wobei das Verfahren auf Empfangskanäle angewendet wird und M" Phasenkalibrierungen umfasst, wobei bei jeder Phasenkalibrierung zwei Kanäle kalibriert werden, Kanäle, die bei zwei aufeinanderfolgenden Phasenkalibrierungen kalibriert werden, einen gleichen Kanal umfassen, Kanäle, die bei einer m"-ten Phasenkalibrierung kalibriert werden, ein r-ter Kanal und ein k-ter Kanal sind, r ≠ k gilt, sowohl r als auch k Ganzzahlen größer oder gleich 1 und kleiner oder gleich N sind, N eine Kanalmenge ist, N eine Ganzzahl größer als 2 ist, M" eine Ganzzahl größer oder gleich 1 ist und m" eine Ganzzahl größer oder gleich 1 und kleiner oder gleich M" ist; und
wobei ein Kalibrierungsverfahren bei der m"-ten Phasenkalibrierung die folgenden Schritte umfasst:
Übertragen, durch eine Mehrkanalkalibrierungseinrichtung, von Kalibrierungsmesssignalen an den r-ten Kanal und den k-ten Kanal, wobei die Kalibrierungsmesssignale verwendet werden, um Phasen des r-ten Kanals und des k-ten Kanals zu messen;
Erhalten eines Phasenkalibrierungskoeffizienten basierend auf den Phasen des r-ten Kanals und des k-ten Kanals; und
wenn m" = 1 gilt, bei der m"-ten Phasenkalibrierung, Anpassen, durch die Mehrkanalkalibrierungseinrichtung, einer Phase des r-ten Kanals und/oder einer Phase des k-ten Kanals basierend auf dem Phasenkalibrierungskoeffizienten, sodass eine Phasenabweichung zwischen dem r-ten Kanal und dem k-ten Kanal eine vorgegebene Phasenabweichung einhält; oder
wenn m" ≥ 2 gilt, bei der m"-ten Phasenkalibrierung, Anpassen, durch die Mehrkanalkalibrierungseinrichtung, einer Phase des r-ten Kanals basierend auf dem Phasenkalibrierungskoeffizienten, sodass eine Phasenabweichung zwischen dem r-ten Kanal und dem k-ten Kanal eine vorgegebene Phasenabweichung einhält, wobei der k-te Kanal an einer (m"-1)-ten Phasenkalibrierung teilnimmt.

7. Sendeempfängersystem, umfassend die Mehrkanalkalibrierungseinrichtung nach einem der Ansprüche 1 oder 2 und/oder die Mehrkanalkalibrierungseinrichtung nach einem der Ansprüche 4 oder 5.

## Revendications

1. Appareil d'étalonnage multicanal, appliqué à N canaux d'émission, et comprenant une unité de commande d'étalonnage (1) et une unité d'alimentation d'étalonnage, dans lequel l'unité d'alimentation d'étalonnage comprend M détecteurs (A1, A2, A3), deux ports d'entrée de chaque détecteur sont couplés à deux canaux, au moins un port d'entrée de chaque détecteur et un port d'entrée d'un autre détecteur sont couplés conjointement à un canal, l'unité de commande d'étalonnage est connectée à chacun des M détecteurs, et N est un nombre entier supérieur à 2 ;
un m^{e} détecteur est configuré pour détecter un signal de mesure d'étalonnage sur un r^{e} canal et un signal de mesure d'étalonnage sur un k^{e} canal, pour obtenir des signaux de niveau représentant des informations d'amplitude et/ou des informations de phase du r^{e} canal et du k^{e} canal, dans lequel 1 ≤ m ≤ M, 1 ≤ r ≤ N, 1 ≤ k ≤ N, r ≠ k, et M est un nombre entier supérieur ou égal à 1 ; et
l'unité de commande d'étalonnage est configurée pour obtenir un coefficient d'étalonnage d'amplitude sur la base des signaux de niveau représentant les informations d'amplitude du r^{e} canal et du k^{e} canal et obtenus par le m^{e} détecteur, dans lequel le coefficient d'étalonnage d'amplitude est utilisé pour étalonner des amplitudes de deux canaux couplés au m^{e} détecteur ; et/ou obtenir un coefficient d'étalonnage de phase sur la base des signaux de niveau représentant les informations de phase du r^{e} canal et du k^{e} canal et obtenus par le m^{e} détecteur, dans lequel le coefficient d'étalonnage de phase est utilisé pour étalonner des phases de deux canaux couplés au m^{e} détecteur ;
l'appareil d'étalonnage multicanal comprenant en outre N unités d'exécution qui sont connectées de manière correspondante aux N canaux d'émission d'une manière biunivoque, dans lequel chaque unité d'exécution est connectée en outre à une unité de commande d'étalonnage, et chaque unité d'exécution est configurée pour régler, sur la base d'un coefficient d'étalonnage d'amplitude, une amplitude d'un canal connecté à l'unité d'exécution, de sorte que l'amplitude du r^{e} canal est égale à l'amplitude du k^{e} canal et/ou régler, sur la base d'un coefficient d'étalonnage de phase, une phase d'un canal connecté à l'unité d'exécution de sorte que la déviation de phase du r^{e} canal et du k^{e} canal se conforme à une déviation de phase prédéfinie ;
dans lequel M = N ; et
lorsque 1 ≤ m ≤ N - 2, les canaux couplés au m^{e} détecteur sont un m^{e} canal et un (m+1)^{e} canal, et les canaux couplés à un (m+1)^{e} détecteur sont le (m+1)^{e} canal et un (m+2)^{e} canal ; ou
lorsque m = N, les canaux couplés au m^{e} détecteur sont un N^{e} canal et un t^{e} canal, dans lequel 1 ≤ t ≤ N - 2.

2. Appareil d'étalonnage multicanal selon la revendication 1, dans lequel l'unité de commande d'étalonnage comprend un module de commande et un module de traitement de données, dans lequel le module de traitement de données est connecté à une extrémité de sortie de chacun des M détecteurs ;
le module de commande est configuré pour commander le module de traitement de données pour lire les signaux de niveau représentant les informations d'amplitude du r^{e} canal et du k^{e} canal et émis par le m^{e} détecteur, et/ou commander le module de traitement de données pour lire les signaux de niveau représentant les informations de phase du r^{e} canal et du k^{e} canal et émis par le m^{e} détecteur ;
le module de traitement de données est configuré pour obtenir le coefficient d'étalonnage d'amplitude sur la base de signaux de niveau représentant les informations d'amplitude du r^{e} canal et du k^{e} canal, et/ou obtenir le coefficient d'étalonnage de phase sur la base des signaux de niveau représentant les informations de phase du r^{e} canal et du k^{e} canal ;
le module de traitement de données est connecté en outre à l'unité d'exécution ; et
le module de commande est configuré en outre pour commander le module de traitement de données pour émettre le coefficient d'étalonnage d'amplitude à l'unité d'exécution, de sorte que l'unité d'exécution règle, sur la base du coefficient d'étalonnage d'amplitude, les amplitudes des canaux couplés au m^{e} détecteur, et/ou commander le module de traitement de données pour émettre le coefficient d'étalonnage de phase à l'unité d'exécution, de sorte que l'unité d'exécution règle, sur la base du coefficient d'étalonnage de phase, les phases des canaux couplés au m^{e} détecteur.

3. Procédé d'étalonnage multicanal destiné à une utilisation dans un appareil d'étalonnage multicanal appliqué à N canaux d'émission, comprenant une unité de commande d'étalonnage et une unité d'alimentation d'étalonnage, l'unité d'alimentation d'étalonnage comprenant M détecteurs, deux ports d'entrée de chaque détecteur étant couplés à deux canaux, au moins un port d'entrée de chaque détecteur et un port d'entrée d'un autre détecteur étant couplés conjointement à un canal, l'unité de commande d'étalonnage étant connectée à chacun des M détecteurs, et N étant un nombre entier supérieur à 2, dans lequel M = N ; et lorsque 1 ≤ m ≤ N - 2, les canaux couplés au m^{e} détecteur étant un m^{e} canal et un (m+1)^{e} canal, et des canaux couplés à un (m+1)^{e} détecteur étant le (m+1)^{e} canal et un (m+2)^{e} canal ; ou lorsque m = N, les canaux couplés au m^{e} détecteur étant un N^{e} canal, et un t^{e} canal, dans lequel 1 ≤ t ≤ N - 2 ;
le procédé s'appliquant à des canaux d'émission, et comprenant M' étalonnages d'amplitude, dans lequel deux canaux sont étalonnés dans chaque étalonnage d'amplitude, des canaux étalonnés dans deux étalonnages d'amplitude consécutifs comprennent un même canal, des canaux étalonnés dans un m^{e} étalonnage d'amplitude sont un r^{e} canal et un k^{e} canal, r ≠ k, r et k sont tous les deux des nombres entiers supérieurs ou égaux à 1 et inférieurs ou égaux à N, N est une quantité de canal, N est un nombre entier supérieur à 2, M' est un nombre entier supérieur ou égal à 1, et m' est un nombre entier supérieur ou égal à 1 et inférieur ou égal à M' ; et
un procédé d'étalonnage dans le m^{e} étalonnage d'amplitude comprenant les étapes suivantes :
la détection (S101), par l'appareil d'étalonnage multicanal, d'un signal de mesure d'étalonnage sur le r^{e} canal et d'un signal de mesure d'étalonnage sur le k^{e} canal, pour obtenir des signaux de niveau représentant des informations d'amplitude du r^{e} canal et du k^{e} canal ;
l'obtention (S102) d'un coefficient d'étalonnage d'amplitude sur la base des signaux de niveau représentant les informations d'amplitude du r^{e} canal et du k^{e} canal ; et
lorsque m' = 1, dans le m^{e} étalonnage d'amplitude, le réglage (S103), par l'appareil d'étalonnage multicanal, d'une amplitude du r^{e} canal et/ou d'une amplitude du k^{e} canal sur la base du coefficient d'étalonnage d'amplitude, de sorte que l'amplitude du r^{e} canal est égale à l'amplitude du k^{e} canal ; ou
lorsque m' ≥ 2, dans le m^{e} étalonnage d'amplitude, le réglage (S103), par l'appareil d'étalonnage multicanal, d'une amplitude du r^{e} canal sur la base du coefficient d'étalonnage d'amplitude, de sorte que l'amplitude du r^{e} canal est égale à une amplitude du k^{e} canal, dans lequel le k^{e} canal participe à un (m' - 1)^{e} étalonnage d'amplitude ;
ou
comprenant M" étalonnages de phase, dans lequel deux canaux sont étalonnés dans chaque étalonnage de phase, des canaux étalonnés dans deux étalonnages de phase consécutifs comprennent un même canal, des canaux étalonnés dans un m"^{e} étalonnage de phase sont un r^{e} canal et un k^{e} canal, r ≠ k, r et k sont tous les deux des nombres entiers supérieurs ou égaux à 1 et inférieurs ou égaux à N, N est une quantité de canal, N est un nombre entier supérieur à 2, M" est un nombre entier supérieur ou égal à 1, et m" est un nombre entier supérieur ou égal à 1 et inférieur ou égal à M" ; et
un procédé d'étalonnage dans le m^{e} étalonnage de phase comprenant les étapes suivantes :
la détection (S201), par l'appareil d'étalonnage multicanal, d'un signal de mesure d'étalonnage sur le r^{e} canal et d'un signal de mesure d'étalonnage sur le k^{e} canal, pour obtenir des signaux de niveau représentant des informations de phase du r^{e} canal et du k^{e} canal ;
l'obtention (S202) d'un coefficient d'étalonnage de phase sur la base des signaux de niveau représentant les informations de phase du r^{e} canal et du k^{e} canal ; et
lorsque m" = 1, dans le m"^{e} étalonnage de phase, le réglage (S203), par l'appareil d'étalonnage multicanal, d'une phase du r^{e} canal et/ou d'une phase du k^{e} canal sur la base du coefficient d'étalonnage de phase, de sorte qu'une déviation de phase entre le r^{e} canal et le k^{e} canal se conforme à une déviation de phase prédéfinie ; ou
lorsque m" ≥ 2, dans le m"^{e} étalonnage de phase, le réglage (S203), par l'appareil d'étalonnage multicanal, d'une phase du r^{e} canal sur la base du coefficient d'étalonnage de phase, de sorte qu'une déviation de phase entre le r^{e} canal et le k^{e} canal se conforme à une déviation de phase prédéfinie, dans lequel le k^{e} canal participe à un (m" - 1)^{e} étalonnage de phase.

4. Appareil d'étalonnage multicanal, appliqué à N canaux de réception, et comprenant une unité d'alimentation d'étalonnage et une unité de commande d'étalonnage (1), dans lequel l'unité d'alimentation d'étalonnage comprend Q unités sources de référence, deux extrémités de sortie de chaque unité source de référence sont couplées à deux canaux, au moins une extrémité de sortie de chaque unité source de référence et une extrémité de sortie d'une autre unité source de référence sont couplées conjointement à un canal, et N est un nombre entier supérieur à 2 ;
une m^{e} unité source de référence est configurée pour émettre des signaux de mesure d'étalonnage à un r^{e} canal et un k^{e} canal, dans lequel les signaux de mesure d'étalonnage sont utilisés pour mesurer des amplitudes et/ou des phases du r^{e} canal et du k^{e} canal, 1 ≤ m ≤ Q, 1 ≤ r ≤ N, 1 ≤ k ≤ N, r ≠ k, et Q est un nombre entier supérieur ou égal à 1 ; et
l'unité de commande d'étalonnage est configurée pour obtenir un coefficient d'étalonnage d'amplitude sur la base des amplitudes du r^{e} canal et du k^{e} canal, dans lequel le coefficient d'étalonnage d'amplitude est utilisé pour étalonner des amplitudes de deux canaux couplés à la m^{e} unité source de référence ; et/ou obtenir un coefficient d'étalonnage de phase sur la base des phases du r^{e} canal et du k^{e} canal, dans lequel le coefficient d'étalonnage de phase est utilisé pour étalonner des phases de deux canaux couplés à la m^{e} unité source de référence ;
l'appareil d'étalonnage comprenant en outre N unités d'exécution qui sont connectées de manière correspondante aux N canaux de réception d'une manière biunivoque, dans lequel chaque unité d'exécution est connectée en outre à l'unité de commande d'étalonnage, et chaque unité d'exécution est configurée pour régler, sur la base d'un coefficient d'étalonnage d'amplitude, une amplitude d'un canal connecté de manière correspondante à l'unité d'exécution, de sorte que l'amplitude du r^{e} canal est égale à l'amplitude du k^{e} canal, et/ou régler, sur la base d'un coefficient d'étalonnage de phase, une phase d'un canal connecté de manière correspondante à l'unité d'exécution de sorte que la déviation de phase du r^{e} canal et du k^{e} canal se conforme à une déviation de phase prédéfinie ;
dans lequel Q = N ; et
lorsque 1 ≤ m ≤ N - 2, les canaux couplés à la m^{e} unité source de référence sont un m^{e} canal et un (m+1)^{e} canal, et les canaux couplés à une (m+1) unité source de référence sont le (m+1)^{e} canal et un (m+2)^{e} canal ; ou
lorsque m = N, les canaux couplés à la m^{e} unité source de référence sont un N^{e} canal et un t^{e} canal, dans lequel 1 ≤ t ≤ N - 2.

5. Appareil d'étalonnage multicanal selon la revendication 4, dans lequel l'unité de commande d'étalonnage comprend un module de commande et un module de traitement de données, dans lequel les extrémités de sortie du module de commande sont connectées aux Q unités sources de référence respectivement, et le module de traitement de données est connecté à chacun des N canaux de réception ;
le module de commande est configuré pour émettre un signal de commande à la m^{e} unité source de référence, et commander le module de traitement de données pour obtenir les amplitudes du r^{e} canal et du k^{e} canal et/ou obtenir les phases du r^{e} canal et du k^{e} canal ;
le module de traitement de données est configuré pour obtenir le coefficient d'étalonnage d'amplitude sur la base des amplitudes du r^{e} canal et du k^{e} canal, et/ou obtenir le coefficient d'étalonnage de phase sur la base d'une déviation de phase prédéfinie et d'une déviation de phase existante entre les phases du r^{e} canal et du k^{e} canal ;
le module de traitement de données est connecté en outre à l'unité d'exécution ; et
le module de commande est configuré en outre pour commander le module de traitement de données pour émettre le coefficient d'étalonnage d'amplitude à l'unité d'exécution, de sorte que l'unité d'exécution règle, sur la base du coefficient d'étalonnage d'amplitude, les amplitudes des deux canaux couplés à la m^{e} unité source de référence, et/ou commander le module de traitement de données pour émettre le coefficient d'étalonnage de phase à l'unité d'exécution, de sorte que l'unité d'exécution règle, sur la base du coefficient d'étalonnage de phase, les phases des deux canaux couplés à la m^{e} unité source de référence.

6. Procédé d'étalonnage multicanal destiné à une utilisation dans un appareil d'étalonnage multicanal appliqué à N canaux de réception comprenant une unité d'alimentation d'étalonnage et une unité de commande d'étalonnage, dans lequel l'unité d'alimentation d'étalonnage comprend Q unités sources de référence, deux extrémités de sortie de chaque unité source de référence sont couplées à deux canaux, au moins une extrémité de sortie de chaque unité source de référence et une extrémité de sortie d'une autre unité source de référence sont couplées conjointement à un canal, et N est un nombre entier supérieur à 2, dans lequel Q = N ; et lorsque 1 ≤ m ≤ N - 2, les canaux couplés à la m^{e} unité source de référence sont un m^{e} canal et un (m+1)^{e} canal, et les canaux couplés à une (m+1) unité source de référence sont le (m+1)^{e} canal et un (m+2)^{e} canal ; ou lorsque m = N, les canaux couplés à la m^{e} unité source de référence sont un N^{e} canal et un t^{e} canal, dans lequel 1 ≤ t ≤ N - 2;
le procédé s'appliquant aux canaux de réception, et comprenant M' étalonnages d'amplitude, dans lequel deux canaux sont étalonnés dans chaque étalonnage d'amplitude, des canaux étalonnés dans deux étalonnages d'amplitude consécutifs comprennent un même canal, des canaux étalonnés dans un m^{e} étalonnage d'amplitude sont un r^{e} canal et un k^{e} canal, r ≠ k, r et k sont tous les deux des nombres entiers supérieurs ou égaux à 1 et inférieurs ou égaux à N, N est une quantité de canal, N est un nombre entier supérieur à 2, M' est un nombre entier supérieur ou égal à 1, et m' est un nombre entier supérieur ou égal à 1 et inférieur ou égal à M' ; et
un procédé d'étalonnage dans le m^{e} étalonnage d'amplitude comprenant les étapes suivantes :
l'émission (S101'), par un appareil d'étalonnage multicanal, de signaux de mesure d'étalonnage au r^{e} canal et au k^{e} canal, dans lequel les signaux de mesure d'étalonnage sont utilisés pour mesurer les amplitudes du r^{e} canal et du k^{e} canal ;
l'obtention (S102') d'un coefficient d'étalonnage d'amplitude sur la base des amplitudes du r^{e} canal et du k^{e} canal ; et
lorsque m' = 1, dans le m^{e} étalonnage d'amplitude, le réglage, par l'appareil d'étalonnage multicanal, d'une amplitude du r^{e} canal et/ou d'une amplitude du k^{e} canal sur la base du coefficient d'étalonnage d'amplitude, de sorte que l'amplitude du r^{e} canal est égale à l'amplitude du k^{e} canal ; ou
lorsque m' ≥ 2, dans le m^{e} étalonnage d'amplitude, le réglage, par l'appareil d'étalonnage multicanal, d'une amplitude du r^{e} canal sur la base du coefficient d'étalonnage d'amplitude, de sorte que l'amplitude du r^{e} canal est égale à une amplitude du k^{e} canal, dans lequel le k^{e} canal participe à un (m' - 1)^{e} étalonnage d'amplitude ;
ou
le procédé s'appliquant à des canaux de réception, et comprenant M" étalonnages de phase, dans lequel deux canaux sont étalonnés dans chaque étalonnage de phase, des canaux étalonnés dans deux étalonnages de phase consécutifs comprennent un même canal, des canaux étalonnés dans un m"^{e} étalonnage de phase sont un r^{e} canal et un k^{e} canal, r ≠ k, r et k sont tous les deux des nombres entiers supérieurs ou égaux à 1 et inférieurs ou égaux à N, N est une quantité de canal, N est un nombre entier supérieur à 2, M" est un nombre entier supérieur ou égal à 1, et m" est un nombre entier supérieur ou égal à 1 et inférieur ou égal à M" ; et
un procédé d'étalonnage dans le m^{e} étalonnage de phase comprenant les étapes suivantes :
l'émission, par un appareil d'étalonnage multicanal, de signaux de mesure d'étalonnage au r^{e} canal et au k^{e} canal, dans lequel les signaux de mesure d'étalonnage sont utilisés pour mesurer des phases du r^{e} canal et du k^{e} canal ;
l'obtention d'un coefficient d'étalonnage de phase sur la base des phases du r^{e} canal et du k^{e} canal ; et
lorsque m" = 1, dans le m"^{e} étalonnage de phase, le réglage, par l'appareil d'étalonnage multicanal, d'une phase du r^{e} canal et/ou d'une phase du k^{e} canal sur la base du coefficient d'étalonnage de phase, de sorte qu'une déviation de phase entre le r^{e} canal et le k^{e} canal se conforme à une déviation de phase prédéfinie ; ou
lorsque m" ≥ 2, dans le m"^{e} étalonnage de phase, le réglage, par l'appareil d'étalonnage multicanal, d'une phase du r^{e} canal sur la base du coefficient d'étalonnage de phase, de sorte qu'une déviation de phase entre le r^{e} canal et le k^{e} canal se conforme à une déviation de phase prédéfinie, dans lequel le k^{e} canal participe à un (m" - 1)^{e} étalonnage de phase.

7. Système d'émetteur-récepteur, comprenant l'appareil d'étalonnage multicanal selon l'une quelconque des revendications 1 et 2, et/ou l'appareil d'étalonnage multicanal selon l'une quelconque des revendications 4 et 5.
